# EUROPEAN PATENT APPLICATION

(11) **EP 2 966 749 A2**
(43) Date of publication of application: **13.01.2016**
(21) Application number: 15172975.3
(22) Date of filing: 19.06.2015
(51) Int. Cl.: H02J 5/00, H02J 7/02, B60L 11/18

(54) **WIRELESS POWER SUPPLY DEVICE**

(30) Priority: 20.06.2014 JP 2014127576; 11.07.2014 JP 2014143461
(71) Applicant: Funai Electric Co., Ltd., Daito city Osaka 574-0013 (JP)
(72) Inventor: WAKABAYASHI, Naoyuki, Osaka, Osaka 574-0013 (JP); NISHIKAWA, Takafumi, Osaka, Osaka 574-0013 (JP); NOBATA, Yukikazu, Osaka, Osaka 574-0013 (JP)
(74) Representative: Osha Liang

(57) **Abstract**

A wireless power supply device (101) includes a resonant circuit (111) comprising a power supply coil (111a) and a resonant capacitor (111b); and a controller that changes a waveform of power in the resonant circuit (111) and causes a phase difference between a phase of a drive signal that drives the resonant circuit (111) and a phase of current flowing through the power supply coil (111a) to be substantially 0.

## Description

### [Technical Field]

The invention relates generally to a wireless power supply device and more particularly to a wireless power supply device comprising a resonant circuit having a power supply coil and a resonant capacitor.

### [Background Art]

Conventional wireless power supply devices and wireless power supply system comprise a resonant circuit having a power supply coil and a resonant capacitor (for example, see Patent Literature 1 or Patent Literature 2).

Patent Literature 1 discloses a wireless power transmission device comprising a resonant circuit having an inductor (power supply coil) and a capacitor (resonant capacitor). This wireless power transmission device comprises a sending device and a receiving device. Moreover, the sending device includes a resonant circuit and a variable voltage source. Moreover, the resonant circuit includes an inductor and a plurality of capacitors, and the plurality of capacitors includes a varicap. Moreover, the varicap has a property of a capacitance value decreasing when a voltage value applied from the variable voltage source increases. As a result, the sending device is able to adjust a resonant frequency established by an inductance of the inductor and a capacitance value (synthesized capacitance value) of the plurality of capacitors by adjusting the voltage value of the variable voltage source. As a result, even in a situation where a resonant frequency of the sending device and a resonant frequency of the receiving device are different, it becomes possible to adjust the voltage value applied to the varicap to make the resonant frequency of the sending device and the resonant frequency of the receiving device substantially equal. As a result, this wireless power transmission device is able to perform power transmission from a power transmission device to the receiving device even in the situation where the resonant frequency of the sending device and the resonant frequency of the receiving device are different.

### [Citation List]

### [Patent Literature]

[Patent Literature 1] Japanese Unexamined Patent Application Publication No. 2011-166883
[Patent Literature 2] Japanese Unexamined Patent Application Publication No. 2013-192365

Here, generally, the varicap has an inconvenience of a withstand voltage and a withstand current being small compared to a normal capacitor (capacitor having a predetermined capacitance value). As a result, in the wireless power transmission device of Patent Literature 1, it is difficult to power supply comparatively large power (for example, power exceeding 100 mW).

### [Summary of the Invention]

A wireless power supply device in accordance with one or more embodiments can efficiently power supply comparatively large power even in a situation where a resonant frequency of a resonant circuit is different from a resonant frequency of a power receiving device.

A wireless power supply device according to one or more embodiments of the present invention may comprise a resonant circuit comprising a power supply coil and a resonant capacitor; and a controller that changes a waveform of power in the resonant circuit and causes a phase difference between a phase of a drive signal that drives the resonant circuit and a phase of current flowing through the power supply coil to be substantially 0. According to the configuration above, for example, comparatively large power may be efficiently power supplied even in a situation where a resonant frequency of the resonant circuit is different from a resonant frequency of a power receiving device.

A wireless power supply device according to one or more embodiments of the present invention may comprise a resonant circuit comprising: a power supply coil that supplies power to an external power receiving device; and a resonant capacitor; a switch connected to the resonant circuit; and a switch controller that controls a duration of the switch being on and off, and causes a phase difference between a phase of a drive signal that drives the resonant circuit and a phase of current that flows through the power supply coil to be substantially 0.

According to the configuration above, for example, when the switch connected to the resonant circuit is turned off so as to cut off the resonant circuit, a state where energy is stored in the resonant capacitor can be maintained. In this situation, the resonant frequency of the resonant circuit can be artificially changed when the switch is turned off. Moreover, in a situation where the switch connected to the resonant circuit is turned on to short the power supply coil, a state where energy is stored in the power supply coil can be maintained. In this situation, the resonant frequency of the resonant circuit can be artificially changed when the switch is turned on. As a result, the resonant frequency of the resonant circuit and the resonant frequency (frequency of the drive signal) of the external power receiving device can be made substantially equal without using a varicap. As a result, comparatively large power can be efficiently power supplied even in the situation where the resonant frequency of the resonant circuit is different from the resonant frequency of the external power receiving device.

According to one or more embodiments of the present invention, for example, a resonant frequency of the resonant circuit may be greater than a drive frequency of the drive signal, and the switch controller turns the switch on and off and, by changing a waveform of the power of the resonant circuit having the resonant frequency, causes the phase difference to be substantially 0. According to the configuration above, in a situation where the switch connected to the resonant circuit is turned off so as to cut off the resonant circuit, the waveform of the power of the resonant circuit having the resonant frequency can be extended when the switch is turned off. Moreover, in a situation where the switch connected to the resonant circuit is turned on so as to short the power supply coil, the waveform of the power of the resonant circuit having the resonant frequency can be extended when the switch is turned on. As a result, the resonant frequency of the resonant circuit can be artificially decreased. Therefore, by configuring the resonant circuit so the resonant frequency of the resonant circuit becomes greater than the drive frequency of the drive signal and artificially decreasing the resonant frequency of the resonant circuit, the resonant frequency of the resonant circuit and the resonant frequency (frequency of the drive signal) of the external power receiving device be easily made substantially equal.

A wireless power supply device according to one or more embodiments of the present invention, for example, may further comprise a voltage phase detector that detects a phase of a voltage of at least one of the resonant capacitor and the power supply coil, wherein the switch controller controls the duration of the switch being on and off, and causes a phase difference between the phase of the drive signal and a phase of the at least one of the resonant capacitor and the power supply coil to be substantially 90 degrees. A phase difference between a phase of a voltage of at least the resonant capacitor or the power supply coil and a phase of the current that flows through the power supply coil may be 90 degrees. Moreover, generally, a voltage phase detector that can detect the phase of the voltage of at least the resonant capacitor or the power supply coil can be easily configured compared to a detector that can detect the phase of the current that flows through the power supply coil. Therefore, if made to be provided is a voltage phase detector having a configuration such as the above, the wireless power supply device can be configured easily, and the phase difference between the phase of the drive signal and the phase of the current that flows through the power supply coil (phase 90 degrees different from the phase of at least the resonant capacitor or the power supply coil) can be detected.

According to one or more embodiments of the present invention, for example, the switch may switch between a state of cutting off the resonant circuit and a state of conducting the resonant circuit. According to the configuration above, because current can be suppressed from flowing in the resonant circuit when the resonant circuit is cut off, the waveform of the current that flows through the power supply coil can be changed easily. As a result, the phase difference between the phase of the drive signal and the phase of the current that flows through the power supply coil can be made to be substantially 0.

The switch controller according to one or more embodiments may, for example, cause the phase difference to be substantially 0 by turning off the switch for a predetermined time period when a voltage value of the resonant capacitor or a voltage value of the power supply coil is at least maximized or minimized. At the point when the voltage value of the resonant capacitor or the voltage value of the power supply coil is at least maximized or minimized, the current that flows through the resonant circuit becomes substantially 0. Therefore, because the switch can be turned off a predetermined time when the current that flows through the resonant circuit is substantially 0 if configured as above, loss of energy generated when the switch is turned off can be reduced.

The switch controller according to one or more embodiments may, for example, cause the phase difference to be substantially 0 by turning off the switch for a predetermined time period that is not an entirety but a portion of when a voltage value of the resonant capacitor or a voltage value of the power supply coil is at least maximized or minimized. According to the configuration above, because a count of turning the switch off can be reduced, unlike the situation where the switch is turned off for a predetermined time at every point when the voltage value of the resonant capacitor or the voltage value of the power supply coil is at least maximized or minimized, loss of the energy generated when the switch is turned off can be further reduced.

According to one or more embodiments, the switch may be a power converter that converts power from the outside to power of an alternating current based on the drive signal by switching the outside to power, and supplies the converted power to the resonant circuit as power for the power supply coil to generate a powered magnetic field. According to the configuration above, for example, a component count of the wireless power supply device can be suppressed from increasing to the extent the wireless power supply device does not need to provide the power converter and the switch separately.

According to one or more embodiments of the present invention, for example, the switch may be connected in parallel to the power supply coil and short the power supply coil. According to the configuration above, because a size of the current that flows through the power supply coil may be maintained when the power supply coil is shorted, the waveform of the current that flows through the power supply coil can be changed easily. As a result, for example, the phase difference between the phase of the drive signal and the phase of the current that flows through the power supply coil can easily be made to be substantially 0.

According to one or more embodiments of the present invention, the switch controller may, for example, cause the phase difference to be substantially 0 by turning on the switch for a predetermined time when a current value of the power supply coil is at least maximized or minimized. At a point when the current value of the power supply coil is at least maximized or minimized, the voltage value of the power supply coil and the voltage value of the resonant capacitor become substantially 0. Therefore, according to the configuration above, for example, because the switch may be turned on a predetermined time when the voltage value of the power supply coil and the voltage value of the resonant capacitor become substantially 0, loss of energy generated when the switch is turned on can be reduced.

According to one or more embodiments of the present invention, the switch controller may switch the switch between on and off positions when one of the positions does not store energy stored in the resonant circuit but the other position stores the energy from among the power supply coil and the resonant capacitor. At a point when storing is not in the one from among the power supply coil and the resonant capacitor but in the other, a state is entered into where the current that flows through the resonant circuit becomes substantially 0 or the voltage value of the power supply coil becomes substantially 0. Therefore, according to the configuration above, for example, because the switch can be turned on and off when the current that flows through the resonant circuit becomes substantially 0 or the voltage value of the power supply coil becomes substantially 0, loss of the energy generated when the switch is turned on and off can be reduced.

A wireless power supply device according to one or more embodiments of the present invention may comprise a power supply coil that supplies power to an external power receiving device; a resonant capacitor connected in series to the power supply coil; a sub capacitor connected in parallel to the resonant capacitor; a switch that switches a connection state between the resonant capacitor and the sub capacitor; and a switch controller that controls the switch, wherein when a voltage value of the resonant capacitor and a voltage value of the sub capacitor are substantially equal, the switch controller turns on the switch, connects the resonant capacitor and the sub capacitor, and controls a duration of the switch being on.

According to the configuration above, when the resonant capacitor and the sub capacitor are connected, the capacitance values of the resonant capacitor and the sub capacitor are synthesized, and the capacitance value increases. As a result, for example, compared to a state where the resonant capacitor and the sub capacitor are disconnected, a resonant frequency of the wireless power supply device, which is proportional to the inverse of the square root of the capacitance value, can be decreased. Moreover, according to the configuration above, the resonant frequency of the wireless power supply device can be changed according to the duration of the switch being on. As a result, for example, the resonant frequency of the wireless power supply device and the resonant frequency of the external power receiving device can artificially be made to substantially match. Moreover, according to the configuration above, compared to a situation of turning on the switch when the voltage value of the resonant capacitor and the voltage value of the sub capacitor are different, the switch can be turned on without disrupting the waveform (frequency) of the voltage applied to the resonant capacitor, and energy loss when the switch is turned on can be reduced. As a result, transmission efficiency of power in power supply from the wireless power supply device to the external power receiving device can be suppressed from decreasing.

According to one or more embodiments of the present invention, for example, a capacitance value of the resonant capacitor may cause a resonant frequency of the resonant capacitor and the power supply coil to be greater than a drive frequency of a drive signal that drives the power supply coil and the resonant capacitor. According to the configuration above, for example, the resonant frequency of the wireless power supply device becomes greater than the drive frequency of the drive signal; therefore, by decreasing the resonant frequency of the wireless power supply device by an extent corresponding to the duration of the switch being on, the resonant frequency of the wireless power supply device and the resonant frequency of the power receiving device (frequency of the drive signal) can easily be artificially substantially matched.

According to one or more embodiments of the present invention, for example, the sub capacitor may comprise a first sub capacitor and a second sub capacitor that are respectively connected in parallel to the resonant capacitor, the switch comprises a first switch connected to the first sub capacitor and a second switch connected to the second sub capacitor, and the switch controller turns on the first switch when the voltage value of the resonant capacitor is a voltage value that is near a maximum and substantially equal to a voltage value of the first sub capacitor, and turns on the second switch when the voltage value of the resonant capacitor is a voltage value that is near a minimum and substantially equal to a voltage value of the second sub capacitor. According to the configuration above, for example, because the first switch is turned on and off when the voltage value of the resonant capacitor is become near the maximum, with the first sub capacitor, the voltage value near the maximum of the voltage value of the resonant capacitor is maintained. Moreover, because the second switch is turned on and off when the voltage value of the resonant capacitor is become near the minimum, with the second sub capacitor, the voltage value near the minimum of the voltage value of the resonant capacitor is maintained. As a result, for example the switch can be turned on twice total from among the waveform of the voltage applied to the resonant capacitor: a point when the voltage value of the resonant capacitor and the voltage value of the first sub capacitor become substantially equal voltage values; a point when the voltage value of the resonant capacitor and the voltage value of the second sub capacitor become substantially equal voltage values. As a result, for example, the resonant frequency of the wireless power supply device and the resonant frequency of the external power receiving device can more reliably be made to substantially match.

According to one or more embodiments of the present invention, for example, the switch controller may turn on the switch when the voltage value of the resonant capacitor and the voltage value of the sub capacitor are substantially equal, and may control a duration of the switch being on and may cause the switch to be turned off when the voltage value of the resonant capacitor and the voltage value of the sub capacitor are again the voltage values of when the switch is turned, when the voltage value of the resonant capacitor and the voltage value of the sub capacitor are substantially equal voltage values. According to the configuration above, for example, the voltage value of the resonant capacitor and the sub capacitor at the point when the switch is turned on and the voltage value of the resonant capacitor and the sub capacitor at the point when the switch is turned off can be matched. As a result, for example, the voltage value of the sub capacitor before the switch is turned on and the voltage value of the sub capacitor after the switch is turned on and off can be substantially matched.

The wireless power supply device according to one or more embodiments of the present invention, for example, may further comprise a phase difference detector that detects a phase difference between a phase of a drive signal that drives the power supply coil and the resonant capacitor and a phase of current that flows through the power supply coil, wherein the switch controller may turn on the switch when the voltage value of the resonant capacitor and the voltage value of the sub capacitor are substantially equal, and may control a duration of the switch being on and may cause the phase difference detected by the phase difference detector to be substantially 0. The frequency of the drive signal and the resonant frequency of the external power receiving device are set to substantially equal values. Therefore, according to the configuration above, for example, because the state where the phase difference between the phase of the drive signal and the phase of the current that flows through the power supply coil becomes substantially 0 becomes the state where the resonant frequency of the wireless power supply device and the frequency of the drive signal become substantially equal, the resonant frequency of the wireless power supply device and the resonant frequency of the external power receiving device can easily be substantially matched.

The wireless power supply device according to one or more embodiments of the present invention, for example, may further comprise a detector that detects at least one of a voltage value applied to the power supply coil or the resonant capacitor and a current value that flows through the power supply coil or the resonant capacitor, wherein the switch controller may change a duration of the switch being on, may compare values before and after the change in the duration of the switch being on between the voltage value or the current value detected by the detector, and may control the duration of the switch being on and causes the voltage value or the current value to increase from before the duration of the switch being on is changed. In a situation where the frequency of the drive signal and the resonant frequency of the wireless power supply device match, an impedance of the power supply coil and the resonant capacitor (resonant circuit) is minimized, and the voltage value or the current value of the power supply coil and the resonant capacitor increases. Therefore, for example, by controlling as above so the voltage value or the current value becomes greater than before changing the duration of the switch being on, the resonant frequency of the wireless power supply device and the resonant frequency of the external power receiving device can be made closer values to an the extent the voltage value or the current value of the power supply coil and the resonant capacitor is increased. As a result, for example, by controlling so as to increase the voltage value or the current value of the power supply coil and the resonant capacitor, the resonant frequency of the wireless power supply device and the resonant frequency of the external power receiving device can more easily be made to match.

A wireless power supply device according to one or more embodiments of the present invention, for example, may further comprise a diode unit connected in parallel to the switch. According to the configuration above, for example, current can flow unidirectionally (from the resonant capacitor to the sub capacitor or from the sub capacitor to the resonant capacitor) via the diode unit even when the switch is turned off. As a result, for example, even in a situation where the switch is turned on later than a point when the voltage value of the resonant capacitor and the voltage value of the sub capacitor are become substantially equal voltage values, the resonant capacitor and the sub capacitor can be connected when the voltage value of the resonant capacitor and the voltage value of the sub capacitor are become substantially equal voltage values. As a result, for example, loss of energy of when the switch is turned on can be more reliably reduced.

### [Brief Description of Drawings]

FIG. 1 is a view illustrating an overall configuration of a wireless power supply system according to one or more embodiments of a first example to a sixth example of the present invention.
FIG. 2 is a block diagram illustrating a configuration of a power supply device according to one or more embodiments of the first and the fourth examples of the present invention.
FIG. 3 is a block diagram illustrating a configuration of a phase comparator according to one or more embodiments of the first example of the present invention.
FIG. 4 is a diagram for describing a calculation method of a duration of a switch being off according to one or more embodiments of the first example of the present invention.
FIG. 5 is a block diagram illustrating a configuration of a power receiving device according to one or more embodiments of the first example of the present invention.
FIG. 6 is a timing chart for describing operations of a switch controller according to one or more embodiments of the first example of the present invention.
FIG. 7 is a block diagram illustrating a configuration of a power supply device according to one or more embodiments of the second example of the present invention.
FIG. 8 is a timing chart for describing operations of a switch controller according to one or more embodiments of the second example of the present invention.
FIG. 9 is a block diagram illustrating a configuration of a power supply device according to one or more embodiments of the third example of the present invention.
FIG. 10 is a timing chart for describing operations of a switch controller according to one or more embodiments of the fourth example of the present invention.
FIG. 11 is a block diagram illustrating a configuration of a power supply device according to one or more embodiments of the fifth example of the present invention.
FIG. 12 is a block diagram illustrating a configuration of a power supply device according to one or more embodiments of the sixth example of the present invention.
FIG. 13 is a block diagram illustrating a configuration of a power supply device according to one or more embodiments of a modified example of the first example of the present invention.
FIG. 14 is a timing chart for describing operations of a switch controller of the power supply device according to one or more embodiments of the modified example of the first example of the present invention.
FIG. 15 is a view illustrating an overall configuration of a wireless power supply system according to one or more embodiments of a seventh example to a ninth example of the present invention.
FIG. 16 is a block diagram illustrating a configuration of a power supply device according to one or more embodiments of the seventh example of the present invention.
FIG. 17 is a circuit diagram illustrating a portion of the configuration of the power supply device according to one or more embodiments of the seventh example of the present invention.
FIG. 18 is a block diagram illustrating a configuration of a phase comparator of the power supply device according to one or more embodiments of the seventh example of the present invention.
FIG. 19 is a timing chart for describing a waveform of a voltage applied to a resonant capacitor before a first switch and a second switch are driven and the like according to one or more embodiments of the seventh example of the present invention.
FIG. 20 is a timing chart for describing a waveform of a voltage applied to the resonant capacitor during driving of the first switch and the second switch and the like according to one or more embodiments of the seventh example of the present invention.
FIG. 21 is a circuit diagram illustrating a portion of a configuration of a power supply device according to one or more embodiments of the eighth example of the present invention.
FIG. 22 is a timing chart for describing a waveform of a voltage applied to a resonant capacitor during driving of a first switch and a second switch and the like according to one or more embodiments of the eighth example of the present invention.
FIG. 23 is a block diagram illustrating a configuration of a power supply device according to one or more embodiments of the ninth example of the present invention.
FIG. 24 is a flowchart for describing a control process of a duration of a switch being on according to one or more embodiments of the ninth example of the present invention.
FIG. 25 is a block diagram illustrating a configuration of a power supply device according to one or more embodiments of a first modified example of the seventh example of the present invention.
FIG. 26 is a circuit diagram illustrating a configuration of a portion of the power supply device according to one or more embodiments of the first modified example of the seventh example of the present invention.
FIG. 27 is a timing chart for describing a waveform of a voltage applied to a resonant capacitor during driving of the first switch according to one or more embodiments of the first modified example of the seventh example of the present invention.
FIG. 28 is a block diagram illustrating a configuration of a power supply device according to one or more embodiments of a second modified example of the seventh example (ninth example) of the present invention.

### [Detailed Description of Embodiments]

Embodiments of the present invention will be described below based on the drawings.

### (First Example)

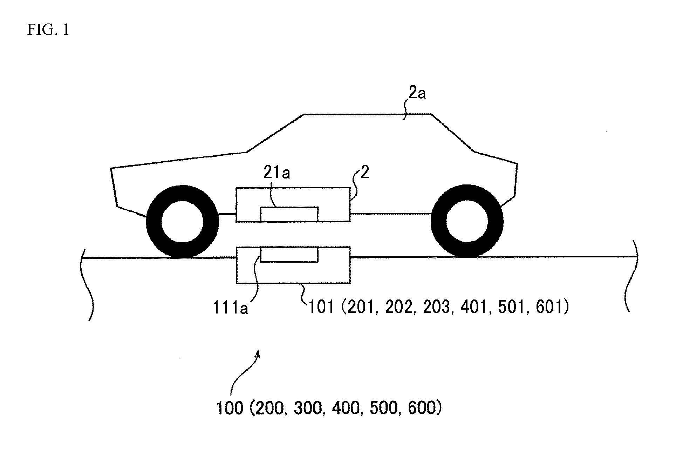

A wireless power supply system 100 according to one or more embodiments of a first example of the present invention will be described with reference to FIG. 1 to FIG. 5.

As illustrated in FIG. 1, the wireless power supply system 100 according to one or more embodiments of the first example of the present invention may comprise a power supply device 101. The power supply device 101 is disposed, for example, on the ground or the like. Moreover, the power supply device 101 includes a power supply coil 111a, and the power supply coil 111a is disposed on a power receiving device 2 side (upper side) that will be described below of the power supply device 101. The power supply device 101 is an example of a "wireless power supply device" of embodiments of the present invention. The wireless power supply device may be also called a non-touch power supply device. The wireless power supply system may be also called a non-touch power supply system.

The wireless power supply system 100 may comprise a power receiving device 2. The power receiving device 2 is disposed, for example, inside an electric automobile 2a. The electric automobile 2a is parked near (above) where the power supply device 101 is disposed. Moreover, a power receiving coil 21a is provided on a power supply device 101 side (ground side) of the power receiving device 2. Moreover, in a state where the electric automobile 2a is parked near (above) the power supply device 101, the power supply coil 111a and the power receiving coil 21 a are provided so as to oppose each other.

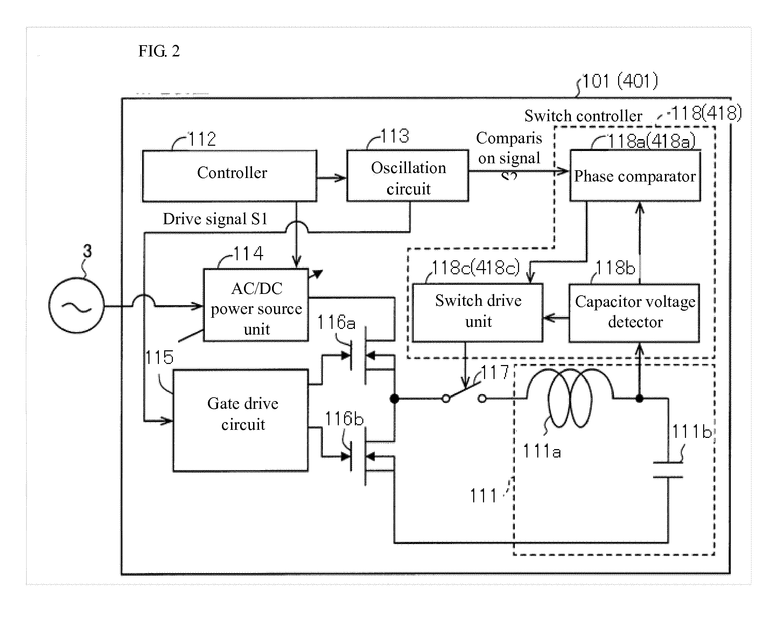

As illustrated in FIG. 2, the power supply device 101 may comprise a resonant circuit 111. The resonant circuit 111 includes the power supply coil 111a and a resonant capacitor 111b. The power supply coil 111a supplies power to the power receiving coil 21a by generating a powered magnetic field by power supplied from an AC/DC power source unit 114 that will be described below. Moreover, the resonant capacitor 111b is connected to the power supply coil 111a in series, and in a situation where a voltage of an alternating current having a resonance frequency is applied, resonates in series (impedance is minimized).

The power supply device 101 may comprise a controller 112. The controller 112 includes a CPU (Central Processing Unit) and controls an entirety of the power supply device 101, such as an oscillation circuit 113 that will be described below.

The power supply device 101 may comprise the oscillation circuit 113. The oscillation circuit 113 outputs a drive signal S1 having a high-frequency drive frequency f1 based on a command of the controller 112. For example, the high-frequency drive frequency f1 is set to a frequency (6.78 MHz) established by a standard or the like (A4WP or the like). Moreover, the oscillation circuit 113 outputs a comparison signal S2 whose phase is delayed (or sped up) 90 degrees from the drive signal S1 with a phase of the drive signal S1 as reference (phase 0 degrees).

According to one or more embodiments of the first example of the present invention, for example, a resonant frequency f2 of the resonant circuit 111 is greater than the drive frequency f1 of the drive signal. That is, a size of an inductance of the power supply coil 111a and a capacitance value of the resonant capacitor 111b are set to values such that the resonant frequency f2 of the resonant circuit 111 becomes greater than the drive frequency f1 (6.78 MHz) of the drive signal.

The power supply device 101 includes the AC/DC power source unit 114. The AC/DC power source unit 114 acquires power of an alternating current from a commercial power source 3 provided on the outside and rectifies the acquired power into a direct current to output the power. Moreover, the AC/DC power source unit 114 can change an output voltage value based on a command from the controller 112.

The power supply device 101 may comprise a gate drive circuit 115. Moreover, the power supply device 101 may comprise an FET (Field Effect Transistor) 116a and an FET 116b. The gate drive circuit 115 is connected to the FET 116a and the FET 116b.

The FET 116a and the FET 116b can turn on and off a direct current voltage applied to the resonant circuit 111 from the AC/DC power source unit 114. Moreover, the gate drive circuit 115 acquires the drive signal S1 from the oscillation unit 113 and, according to the acquired drive signal S1, turns the FET 116a and the FET 116b on and off so one from among the FET 116a and the FET 116b enters a state of being turned on and the other enters a state of being turned off.

In a situation where the FET 116a is turned on, by turning off the FET 116b, the voltage from the AC/DC power source unit 114 is applied to a power supply coil 111a side. Moreover, in a situation where the FET 116a is turned off, by turning on the FET 116b, the voltage applied to the power source coil 111a is made to be 0. That is, the gate drive circuit 115 is configured as a so-called half bridge circuit; it converts the voltage of a direct current from the AC/DC power source unit 114 into a voltage of an alternating current and outputs this to the resonant capacitor 111b and the power supply coil 111a.

According to one or more embodiments of the first example of the present invention, as illustrated in FIG. 2, the power supply device 101 may comprise a switch 117. The switch 117 includes an FET or the like and is provided between the FET 116a and FET 116b and the power supply coil 111a. The switch 117 switches between a state where the resonant circuit 111 is cut off (off) and a state where the resonant circuit 111 is conducted (on) based on a command from a switch controller 118 that will be described below.

The power supply device 101 includes the switch controller 118. The switch controller 118 includes a phase comparator 118a, a capacitor voltage detector 118b, and a switch drive unit 118c. The phase comparator 118a and the capacitor voltage detector 118b are examples of the "voltage phase detector" one or more embodiments of the present invention.

According to one or more embodiments of the first example of the present invention, the capacitor voltage detector 118b is configured to be able to detect a voltage value of a capacitor voltage V_{C} and a phase of the capacitor voltage V_{C} of the resonant capacitor 111b. That is, the capacitor voltage detector 118b can acquire a waveform of the capacitor voltage V_{C}. Moreover, the capacitor voltage detector 118b transmits the acquired waveform of the capacitor voltage V_{C} to the phase comparator 118a.

Furthermore, according to one or more embodiments of the first example of the present invention, the switch controller 118 controls a time T1 of turning off the switch 117 so a phase difference φ1 between a phase of the drive signal S1 that drives the resonant circuit 111 and a phase of a coil current I_{L} that flows through the power supply coil 111a becomes substantially 0.

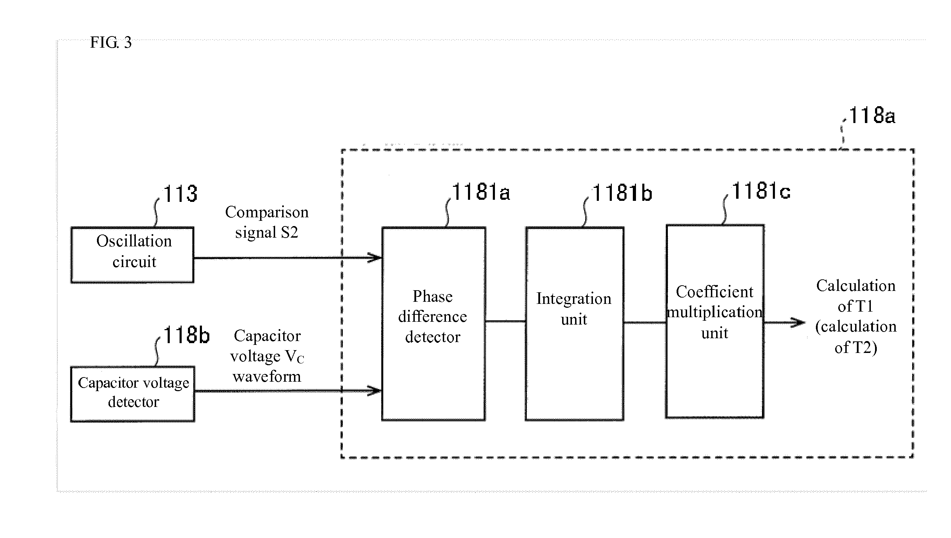

Specifically, as illustrated in FIG. 3, the phase comparator 118a of the switch controller 118 includes a phase difference detector 1181a, an integration unit 1181b, and a coefficient multiplication unit 1181c. The phase difference detector 1181 a acquires a comparison signal S2 from the oscillation circuit 113. Moreover, the phase difference detector 1181a acquires the waveform of the capacitor voltage V_{C}. Moreover, the phase difference detector 1181 a detects the phase difference φ1 by comparing the acquired comparison signal S2 and the acquired capacitor voltage V_{C}.

Here, it is known that a phase difference between the phase of the coil current I_{L} that flows through the power supply coil 111a and the phase of the capacitor voltage V_{C} becomes 90 degrees. That is, the phase difference φ1 between the phase of the capacitor voltage V_{C} and a phase of the comparison signal S2 (90 degree phase difference from the drive signal S1) and the phase difference φ1 between the phase of the drive signal S1 and the phase of the coil current I_{L} that flow through the power supply coil 111a have the same value.

As illustrated in FIG. 3, the integration unit 1181b acquires the phase difference φ1 from the phase difference detector 1181a and performs integration. Moreover, the coefficient multiplication unit 1181c calculates the time T1 of turning off the switch 117 by multiplying a predetermined coefficient to a value of the phase difference φ1 integrated by the integration unit 1181b. That is, the phase comparator 118a is configured to perform a so-called PI (Proportional Integral) control.

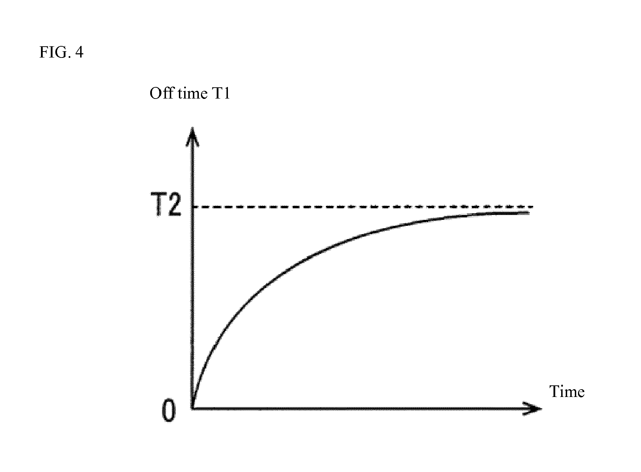

For example, as illustrated in FIG. 4, in a situation where the phase difference φ1 does not become substantially 0 after the switch drive unit 118c turns off the switch 118 for the time T1, with the phase comparator 118a, a value based on the phase difference φ1 that is not substantially 0 is added to (subtracted from) the time T1. Moreover, by repeating this addition (subtraction), the time T1 converges into a time T2, and the phase difference φ1 becomes substantially 0. The time T2 is an example of the "predetermined time" of embodiments of the present invention.

Furthermore, as illustrated in FIG. 2, the switch drive unit 118c acquires the capacitor voltage V_{C} from the capacitor voltage detector 118b and acquires information of the time T1 from the phase comparator 118a. Moreover, the switch drive unit 118c turns the switch 117 on and off based on the acquired capacitor voltage V_{C} and information of the time T1.

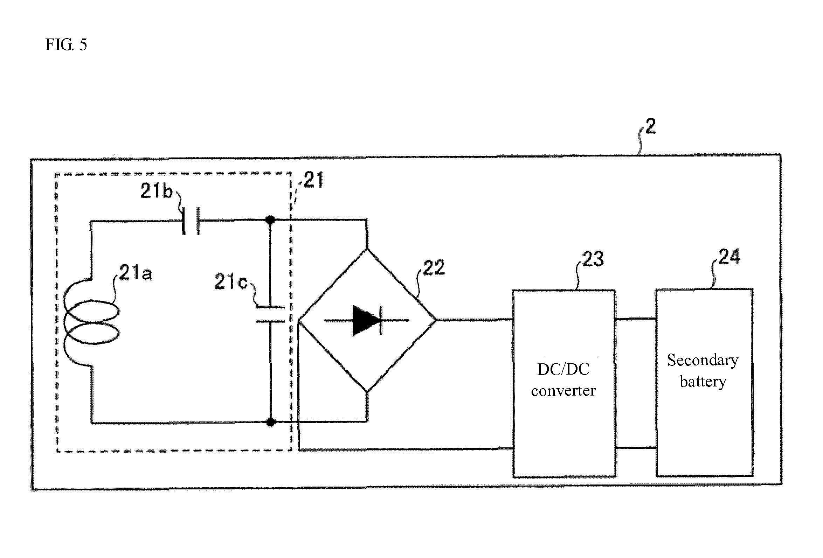

Furthermore, as illustrated in FIG. 5, the power receiving device 2 may comprise a resonant circuit 21. The resonant circuit 21 includes the power receiving coil 21a and resonant capacitors 21b and 21c. Moreover, the power receiving coil 21 a receives power by the powered magnetic field generated by the power supply coil 111a.

The resonant capacitor 21b is connected in series to the power receiving coil 21a. Moreover, the resonant capacitor 21c is connected in parallel to the power receiving coil 21a. Moreover, a capacity of the resonant capacitor 21b and 21c is established according to a load resistance value of a DC/DC converter 23 and a secondary battery 24, which will be described below. Moreover, a resonant frequency f3 of the resonant circuit 21, similarly to the drive frequency f1 of the drive signal S1 of the power supply device 101, is set to a frequency (6.78 MHz) established by a standard or the like (A4WP or the like). That is, the resonant frequency f3 of the resonant circuit 21 and the drive frequency f1 of the drive signal S1 are set to be substantially equal. Moreover, the power supply device 101 and the power receiving device 2 can perform power supply by a so-called magnetic resonance method.

The power receiving device 2 may comprise a rectification circuit 22. The rectification circuit 22 includes a plurality of diodes and the like and rectifies an alternating current of the power received by the power receiving coil 21a into a direct current.

The power receiving unit 2 may comprise the DC/DC converter 23. The DC/DC converter 23 converts a voltage value of the rectified direct current into a constant voltage value of a direct current suited for charging the secondary battery 24 that will be described below.

Furthermore, the power receiving device 2 may comprise the secondary battery 24. The secondary battery 24 charges the power supplied from the DC/DC converter 23.

### (Operations before Driving of Switch 117)

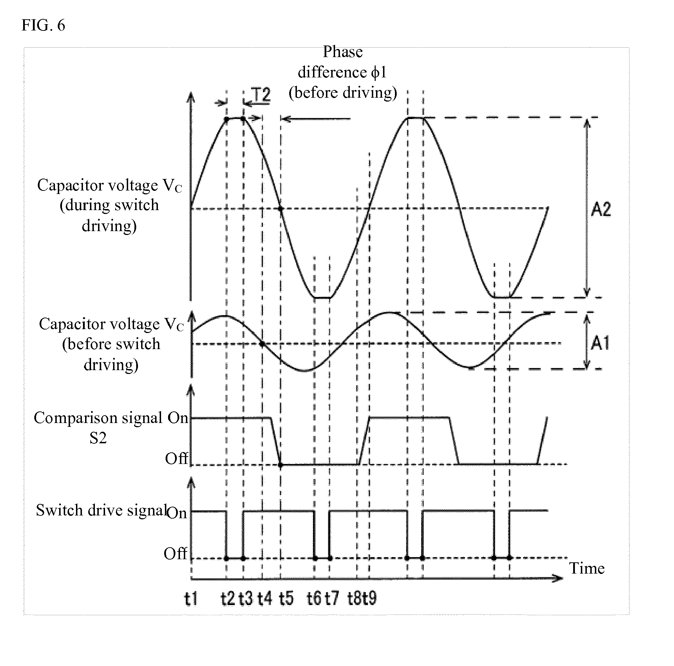

Next, operations of the wireless power supply system 100 before the switch 117 is driven (before switch 117 driving) will be described with reference to FIG. 6.

First, from point t1 to point t2, the capacitor voltage V_{C} gradually increases. Moreover, the comparison signal S2 is turned on. Then, at point t2, the capacitor voltage V_{C} becomes a maximum value.

Then, from point t2 to point t4, the capacitor voltage V_{C} gradually decreases. Then, at point t4, the capacitor voltage V_{C} becomes substantially 0. Moreover, because the resonant frequency f2 of the resonant circuit 111 is greater than the drive frequency f1 of the drive signal S1 (comparison signal S2), the comparison signal S2 is turned off at point t5 (after point t4). In this situation, the phase difference between the phase of the capacitor voltage V_{C} and the phase of the comparison signal S2 becomes the phase difference φ1.

Then, at point t8, the capacitor voltage V_{C} becomes equal to a value at point t1. Therefore, a period of the wireless power supply system 100 before the switch 117 is driven becomes a period from point t1 to point t8.

Furthermore, the capacitor voltage V_{C} of the wireless power supply system 100 before the switch 117 is driven includes an amplitude A1.

### (Operations during Driving of Switch 117)

Next, operations of the wireless power supply system 100 in a situation where the switch 117 is driven (during switch 117 driving) so the phase difference φ1 between the phase of the drive signal S1 (comparison signal S2) that drives the resonant circuit 111 and the phase of the coil current I_{L} (capacitor voltage V_{C}) that flows through the power supply coil 111a becomes substantially 0 will be described with reference to FIG. 6. Control of driving of the switch 117 is performed by the switch controller 118.

First, from point t1 to point t2, the capacitor voltage V_{C} gradually increases. Moreover, the comparison signal S2 is turned on. Then, at point t2, the capacitor voltage V_{C} becomes a maximum value.

According to one or more embodiments of the first example of the present invention, by turning off the switch 117 for the time T2 at point t2 when the capacitor voltage V_{C} is maximized and at point t6 when it is minimized to change the waveform of the capacitor voltage V_{C}, the phase difference φ1 between the phase of the drive signal S1 (comparison signal S2) and the phase of the coil current I_{L} (capacitor voltage V_{C}) that flows through the power supply coil 111a becomes substantially 0.

That is, according to one or more embodiments of the first example of the present invention, on and off of the switch 117 is switched at a point (point t2 and point t6) when an energy E1 stored in the resonant circuit 111 enters a state of not being stored in the power supply coil 111a but being stored in the resonant capacitor 111b.

In a situation where a capacitance value of the energy E1 and the resonant capacitor 111b is defined as C and the inductance of the power supply coil 111a is defined as L, the energy E1 can be expressed by the following formula (1). E1 = 1/2 × C × V_{C}² + 1/2 × L × I_{L}²...(1)

At point t2, the capacitor voltage V_{C} becomes the maximum value. Meanwhile, because the phase of the coil current I_{L} differs 90 degrees from the phase of the capacitor voltage V_{C}, the coil current I_{L} becomes 0. Therefore, the energy E1 enters a state represented by the following formula (2). E1 = 1/2 × C × V_{C}²...(2)

Then, in a period from point t2 to point t3 (time T2), the switch 117 is turned off. In this situation, because the coil current I_{L} is 0, a loss of the energy E1 due to the resonant circuit 111 being cut off is substantially 0. Then, because the resonant circuit 111 is cut off, the capacitor voltage V_{C} does not change in the period from point t2 to t3.

Then, from point t3 to point t5, the capacitor voltage V_{C} gradually decreases. Then, at point t5, the capacitor voltage V_{C} becomes substantially 0. Moreover, the comparison signal S2 is also turned off at point t5. In this situation, the phase difference φ1 between the phase of the capacitor voltage V_{C} and the phase of the comparison signal S2 becomes substantially 0.

Then, at point t9, the capacitor voltage V_{C} becomes equal to the value at point t1. Therefore, a period of the waveform of the capacitor voltage V_{C} becomes a period from point t1 to point t9 and becomes equal to a period of the comparison signal S2 (drive signal S1). That is, the frequency of the capacitor voltage V_{C} (resonant frequency f2 of the resonant circuit 111) is artificially changed to a value equal to the drive frequency f1 of the drive signal S1.

Furthermore, the capacitor voltage V_{C} includes an amplitude A2. Moreover, the amplitude A2 becomes greater than the amplitude A1 before driving of the switch 117. That is, the drive frequency f1 and the resonant frequency f2 of the resonant circuit 111 becoming equal values signifies that the impedance of the resonant circuit 111 is become smaller compared to before the switch 117 is driven.

According to one or more embodiments of the first example of the present invention, effects such as below can be obtained.

As described above, the power supply device 101 according to one or more embodiments of the first example of the present invention may comprise the resonant circuit 111 that includes the power supply coil 111a and the resonant capacitor 111b, changes the waveform of the power (capacitor voltage V_{C}) in the resonant circuit, and controls the phase difference between the phase of the drive signal S1 that drives the resonant circuit 111 and the phase of the waveform of the current I_{L} that flows through the power supply coil 111a to be substantially 0. Specifically, in embodiments of the first example of the present invention, the switch 117 is connected to the resonant circuit 111. Moreover, the switch controller 118 controls the time T1 of turning off the switch 117 so the phase difference φ1 between the phase of the drive signal S1 that drives the resonant circuit 111 and the phase of the coil current I_{L} that flows through the power supply coil 111a becomes substantially 0. As a result, when the switch 117 connected to the resonant circuit 111 is turned off so as to cut off the resonant circuit 111, and the state where the energy E1 is stored in the resonant capacitor 111b can be maintained. Moreover, the resonant frequency f2 of the resonant circuit 111 can be artificially changed during the time T1 (time T2) when the switch 117 is turned off. As a result, the resonant frequency f2 of the resonant circuit 111 and the resonant frequency f3 (drive frequency f1) of the power receiving device 2 can be made substantially equal without using a varicap. As a result, a comparatively large power can be efficiently power supplied even in a situation where the resonant frequency f2 of the resonant circuit 111 is different from the resonant frequency f3 of the power receiving device 2.

Furthermore, according to one or more embodiments of the first example of the present invention, as above, the resonant circuit 111 may be configured so the resonant frequency f2 of the resonant circuit 111 becomes greater than the drive frequency f1 of the drive signal S1. Moreover, the switch controller 118 is configured to turn the switch 117 on and off and, by changing the waveform of the power (capacitor voltage V_{C}) of the resonant circuit 111 having the resonant frequency f2, perform a control of making the phase difference φ1 between the phase of the drive signal S1 and the phase of the coil current I_{L} that flows through the power supply coil 111a substantially 0. As a result, when the switch 117 connected to the resonant circuit 111 is turned off so as to cut off the resonant circuit 111, the waveform of the coil current I_{L} that flows through the power supply coil 111a having the resonant frequency f2 (waveform of the capacitor voltage V_{C} applied to the resonant capacitor 111b) can be extended during the time T1 (time T2) of being turned off. As a result, the resonant frequency f2 of the resonant circuit 111 can easily be artificially made smaller. As a result, by configuring the resonant circuit 111 so the resonant frequency f2 of the resonant circuit 111 becomes greater than the drive frequency f1 of the drive signal and artificially decreasing the resonant frequency f2 of the resonant circuit 111, the resonant frequency f2 of the resonant circuit 111 and the resonant frequency f3 (drive frequency f1) of the power receiving device 2 can easily be made substantially equal.

Furthermore, according to one or more embodiments of the first example of the present invention, as above, the power supply device 101 includes the capacitor voltage detector 118b and phase comparator 118a that can detect the phase of the capacitor voltage V_{C} of the resonant capacitor 111b. Moreover, the switch controller 118 is configured to control the time T1 of turning off the switch 117 so the phase difference between the phase of the drive signal S1 and the phase of the capacitor voltage V_{C} becomes substantially 90 degrees (so the phase difference between the phase of the comparison signal S2 and the phase of the capacitor voltage V_{C} becomes substantially 0). Here, the phase difference between the phase of the capacitor voltage V_{C} and the phase of the coil current I_{L} that flows through the power supply coil 111a is 90 degrees. Moreover, generally, the capacitor voltage detector 118b and the phase comparator 118a that can detect the phase of the capacitor voltage V_{C}, compared to a detector (for example, a current sensor) that can detect the phase of the coil current I_{L} that flows through the power supply coil 111a, can be provided easily. Therefore, by providing a capacitor voltage detector 118b and phase comparator 118a having a configuration such as above, the power supply device 101 can be configured easily, and the phase difference φ1 between the phase of the drive signal S1 and the phase of the coil current I_{L} that flows through the power supply coil 111a (phase 90 degrees different from the phase of the capacitor voltage V_{C}) can be detected.

Furthermore, according to one or more embodiments of the first example of the present invention, as above, the switch 117 is connected to the resonant circuit 111 so switching is enabled between the state where the resonant circuit 111 is cut off and the state where the resonant circuit 111 is conducted. Because current can be suppressed from flowing in the resonant circuit 111 thereby when the resonant circuit 111 is cut off, the waveform of the coil current I_{L} that flows through the power supply coil 111a (waveform of the capacitor voltage V_{C}) can be changed easily. As a result, the phase difference between the phase of the drive signal S1 and the phase of the coil current I_{L} that flows through the power supply coil 111a can be made to be substantially 0.

Furthermore, according to one or more embodiments of the first example of the present invention, as above, the switch controller 118 may be configured so by turning off the switch 117 for the time T2 at point t2 when the capacitor voltage V_{C} is maximized and at point t6 when it is minimized, the phase difference φ1 between the phase of the drive signal S1 and the phase of the coil current I_{L} that flows through the power supply coil 111a becomes substantially 0. Here, at point t2 when the capacitor voltage V_{C} is maximized and at point t6 when it is minimized, the current that flows through the resonant circuit 111 (coil current I_{L}) becomes substantially 0. Therefore, because the switch 117 can be turned off for the time T2 when the current that flows through the resonant circuit 111 is substantially 0 by being configured as above, loss of the energy E1 generated when the switch 117 is turned off can be reduced.

Furthermore, according to one or more embodiments of the first example of the present invention, as above, the switch controller 118 may perform the control of switching on and off of the switch 117 at the point (point t2 and point t6) when the energy E1 stored in the resonant circuit 111 enters the state of not being stored in the power supply coil 111a but being stored in the resonant capacitor 111b. Here, at the point (point t2 and point t6) when the state is entered into of not being stored in the power supply coil 111a but being stored in the resonant capacitor 111b, the state is entered into where the current that flows through the resonant circuit 111 (coil current I_{L}) becomes substantially 0. Therefore, because the switch 117 can be turned on and off when the current that flows through the resonant circuit 111 becomes substantially 0 by being configured as above, loss of the energy E1 generated when the switch 117 is turned on and off can be reduced.

### (Second Example)

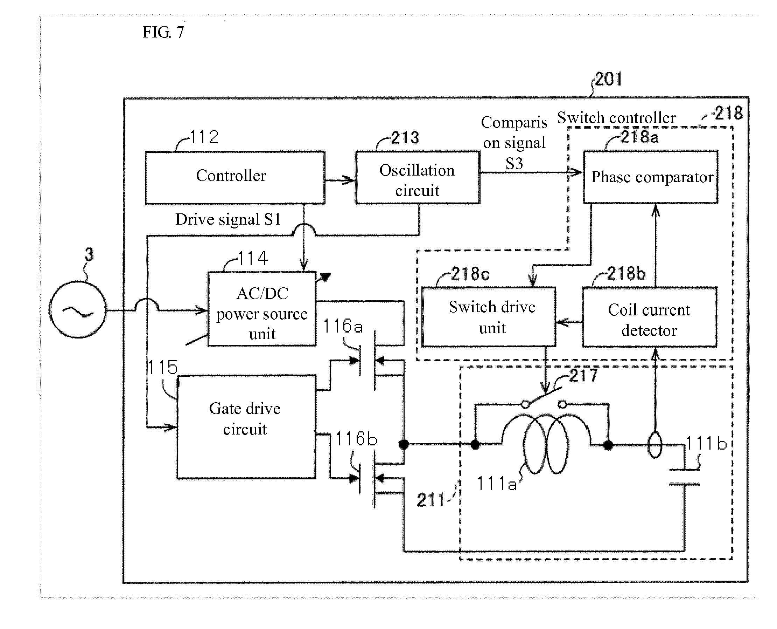

A wireless power supply system 200 according to embodiments of a second example of the present invention will be described with reference to FIG. 1 and FIG. 7. According to one or more embodiments of the second example of the present invention, unlike the wireless power supply system 100 of embodiments of the first example of the present invention where the switch is connected to the resonant circuit so as to enable switching between the state where the resonant circuit is cut off and the state where the resonant circuit is conducted, a switch is connected in parallel to the power supply coil so as to enable shorting the power supply coil.

As illustrated in FIG. 1, the wireless power supply system 200 according to one or more embodiments of the second example of the present invention may comprise a power supply device 201.

Furthermore, as illustrated in FIG. 7, the power supply device 201 may comprise an oscillation circuit 213. The oscillation circuit 213, unlike the oscillation circuit 113 according to embodiments of the first example of the present invention, may output a comparison signal S3. Moreover, a phase difference between a phase of the comparison signal S3 and the phase of the drive signal S1 is set to be 0.

Furthermore, the power supply device 201 may comprise a resonant circuit 211. The resonant circuit 211 includes the power supply coil 111a, the resonant capacitor 111b, and a switch 217.

According to one or more embodiments of the second example of the present invention, the switch 217 is connected in parallel to the power supply coil 111a so as to enable shorting the power supply coil 111a. That is, in a situation where the switch 217 is turned on, both ends of the power supply coil 111a are shorted, and a potential difference between both ends of the power supply coil 111a becomes 0.

Furthermore, the power supply device 201 may comprise a switch controller 218. The switch controller 218 includes a phase comparator 218a, a coil current detector 218b, and a switch drive unit 218c.

The coil current detector 218b includes a current sensor and the like and acquires the waveform (current value and phase) of the coil current I_{L} of the power supply coil 111a.

The phase comparator 218a acquires the waveform of the coil current I_{L} from the coil current detector 218b and acquires the comparison signal S3 from the oscillation circuit 213. The phase comparator 218a, based on the acquired waveform of the coil current I_{L} and comparison signal S3, calculates a phase difference φ2 and a time T3 of turning on the switch 217. The phase comparator 218a transmits information of the time T3 to the switch drive unit 218c.

The switch drive unit 218c acquires the information of the time T3 from the phase comparator 218a and the coil current I_{L} from the coil current detector 218b and, based on the acquired time T3 from the phase comparator 218a and the coil current I_{L} from the coil current detector 218b, turns the switch 217 on and off. Other configurations of the wireless power supply system 200 according to embodiments of the second example of the present invention are similar to those of the wireless power supply system 100 according to embodiments of the first example of the present invention.

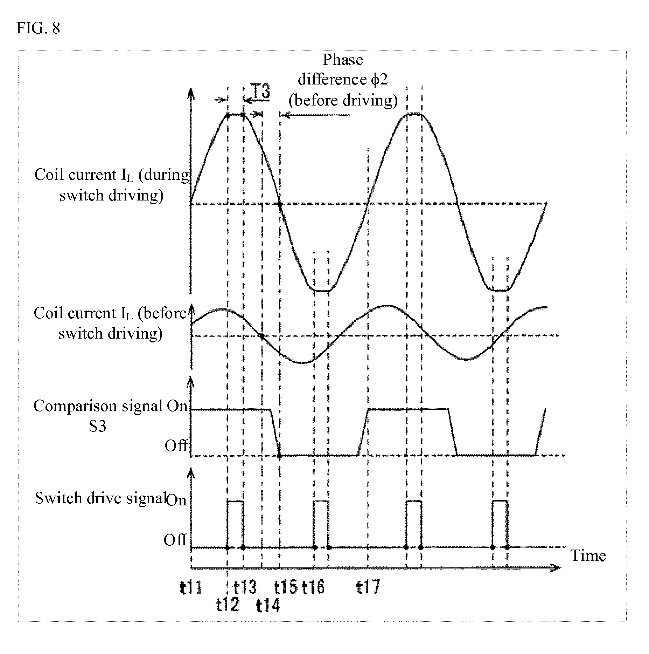

Next, operations of the wireless power supply system 200 in a situation where the switch 217 is driven so the phase difference φ2 between the phase of the drive signal S1 (comparison signal S3) that drives the resonant circuit 211 and the phase of the coil current I_{L} (capacitor voltage V_{C}) that flows through the power supply coil 111a becomes substantially 0 will be described with reference to FIG. 8. Control of driving of the switch 217 is performed by the switch controller 218.

First, from point t11 to point t12, the coil current I_{L} gradually increases. Moreover, the comparison signal S3 is turned on. Then, at point t12, the coil current I_{L} becomes a maximum value.

According to one or more embodiments of the second example of the present invention, by turning the switch 217 on for the time T3 at point t12 when the coil current I_{L} is maximized and at point t16 when it is minimized, the phase difference φ2 between the phase of the drive signal S1 (comparison signal S3) and the phase of the coil current I_{L} that flows through the power supply coil 111a is made to be substantially 0.

That is, in embodiments of the second example of the present invention, on and off of the switch 217 is switched at a point (point t12 and point t16) when a state is entered into where an energy E2 stored in the resonant circuit 211 is not stored in the resonant capacitor 111b but stored in the power supply coil 111a.

In a situation where a capacitance value of the energy E2 and the resonant capacitor 111b is defined as C and the inductance of the power supply coil 111a is defined as L, expression by the following formula (3) becomes possible. E2 = 1/2 × C × V_{C}² + 1/2 × L × I_{L}²...(3)

At point t12, the coil current I_{L} becomes the maximum value. Meanwhile, because the phase of the capacitor voltage V_{C} differs 90 degrees from the phase of the coil current I_{L}, the capacitor voltage V_{C} becomes 0. Therefore, a state is entered into of the following formula (4). E2 = 1/2 × L × I_{L}²... (4)

Then, in a period from point t12 to point t13 (for the time T3), the switch 217 is turned on. In this situation, because the power supply coil 111a and resonant capacitor 111b voltage values are substantially 0, loss of the energy E2 by the power supply coil 111a being shorted is substantially 0. Then, because the power supply coil 111a is shorted, the coil current I_{L} does not change in the period from point t12 to point t13.

Then, from point t13 to point t15, the coil current I_{L} gradually decreases. Then, at point t15, the coil current I_{L} becomes substantially 0. Moreover, the comparison signal S3 is also turned off at point t15. In this situation, the phase difference φ2 between the phase of the coil current I_{L} and the phase of the comparison signal S3 becomes substantially 0. The phase difference φ2 before the switch 217 is driven is a phase that corresponds to point t14 to point t15.

Then, at point t17, the coil current I_{L} becomes equal to a value at point t11. Therefore, a period of the waveform of the coil current I_{L} becomes a period from point t11 to point t17 and becomes equal to a period of the comparison signal S3 (drive signal S1). That is, the resonant frequency f2 of the resonant circuit 211 is changed artificially to a value equal to the drive frequency f1 of the drive signal S 1.

According to one or more embodiments of the second example of the present invention, effects such as below can be obtained.

According to one or more embodiments of the second example of the present invention, as above, the switch 217 is connected in parallel to the power supply coil 111a so as to enable shorting the power supply coil 111a. Because a size of the coil current I_{L} that flows through the power supply coil 111a can thereby be maintained while the power supply coil 111a is shorted, the waveform of the coil current I_{L} that flows through the power supply coil 111a can be changed easily. As a result, the phase difference φ2 between the phase of the drive signal S1 and the phase of the coil current I_{L} that flows through the power supply coil 111a can easily be made to be substantially 0.

Furthermore, according to one or more embodiments of the second example of the present invention, as above, the switch controller 218 is configured so by turning on the switch 217 for the time T3 at point t12 when the current value of the coil current I_{L} is maximized and at point t16 when it is minimized, the phase difference φ2 between the phase of the drive signal S1 and the phase of the coil current I_{L} that flows through the power supply coil 111a becomes substantially 0. Here, at point t12 when the current value of the coil current I_{L} is maximized and at point t16 when it is minimized, the voltage value of the power supply coil 111a and the voltage value of the resonant capacitor 111b become substantially 0. Therefore, because the switch 217 can be turned on for the time T3 when the voltage value of the power supply coil 111a and the voltage value of the resonant capacitor 111b become substantially 0 by being configured as above, loss of energy generated when the switch 217 is turned on can be reduced. Moreover, other effects of the wireless power supply system 200 according to embodiments of the second example of the present invention are similar to those of the wireless power supply system 100 according to embodiments of the first example of the present invention.

### (Third Example)

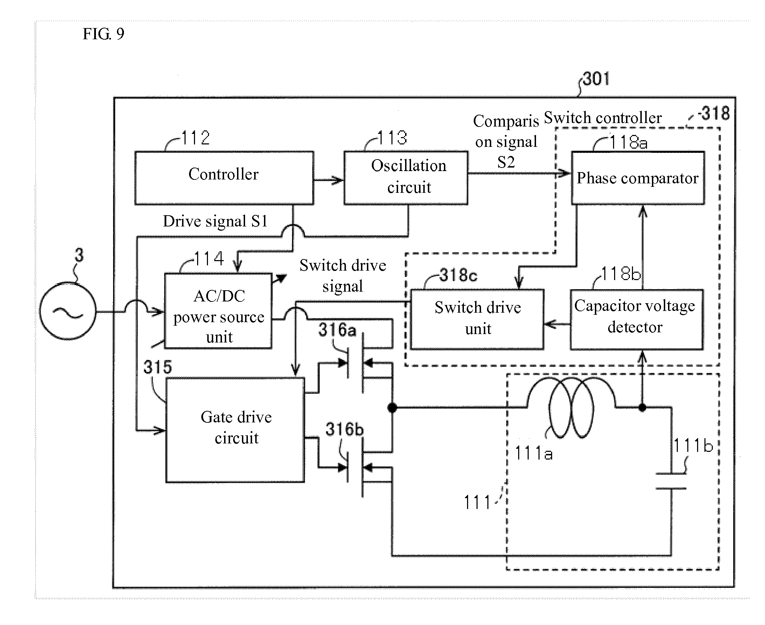

A wireless power supply system 300 according to one or more embodiments of a third example of the present invention will be described with reference to FIG. 1 and FIG. 9. In embodiments of the third example of the present invention, unlike the wireless power supply system 100 according to embodiments of the first example of the present invention where the gate drive circuit and FET that switch the power supplied form the AC/DC power source unit and the switch are configured separately, a gate drive circuit and FET are configured to also function as a switch.

As illustrated in FIG. 1, the wireless power supply system 300 according to one or more embodiments of the third example of the present invention may comprise a power supply device 301. Moreover, as illustrated in FIG. 9, the power supply device 301 includes a gate drive circuit 315, FETs 316a and 316b, and a switch controller 318. The gate drive circuit 315 and the FETs 316a and 316b are examples of the "power converter" of embodiments of the present invention.

According to one or more embodiments of a third example of the present invention, as illustrated in FIG. 9, the gate drive circuit 315 and the FETs 316a and 316b that convert the power supplied from the AC/DC power source unit 114 into power of an alternating current based on the drive signal S1 by switching the power supplied from the AC/DC power source unit 114 and supply this to the resonant circuit 111 as the power for generating the powered magnetic field are configured to also function as a switch.

Specifically, the gate drive circuit 315 acquires a signal for driving the switch (switch drive signal) from the switch controller 318 and turns off both FETs 316a and 316b for the time T2. Moreover, the gate drive circuit 315 turns off both FETs 316a and 316b for the time T2 at a point similar to the point when the switch drive unit 118c according to embodiments of the first example of the present invention turns off the switch 117.

As a result, the gate drive circuit 315 and the FETs 316a and 316b, similarly to the switch 117 according to embodiments of the first example of the present invention, can switch between the state where the resonant circuit 111 is cut off and the state where the resonant circuit 111 is conducted. Moreover, other configurations of the wireless power supply system 300 according to embodiments of the third example of the present invention are similar to those of the wireless power supply system 100 according to embodiments of the first example of the present invention.

According to one or more embodiments of the third example of the present invention, effects such as below can be obtained.

According to one or more embodiments of the third example of the present invention,, as above, the gate drive circuit 315 and the FETs 316a and 316b that convert the power supplied from the AC/DC power source unit 114 into the power of an alternating current based on the drive signal S1 by switching the power supplied from the AC/DC power source unit 114 and supply this to the resonant circuit 111 as the power for generating the powered magnetic field are configured to also function as the switch. As a result, to the extent that the gate drive circuit 315 and FETs 316a and 316b and the switch do not need to be provided separately, a component count of the power supply device 301 can be suppressed from increasing. Moreover, other effects of the wireless power supply system 300 according to emobodiments of the third example of the present invention are similar to those of the wireless power supply system 100 according to embodiments of the first example of the present invention.

### (Fourth Example)

A wireless power supply system 400 according to a fourth example will be described with reference to FIG. 1 and FIG. 2. In embodiments of the fourth example of the present invention, unlike the wireless power supply system 100 according to embodiments of the first example of the present invention configured so the switch is turned off at every point when the capacitor voltage is maximized and minimized, the switch is not turned off at a point when the capacitor voltage is minimized, and the switch is turned on every two periods at a point when the capacitor voltage is maximized.

As illustrated in FIG. 1, according to one or more embodiments of the fourth example of the present invention, the wireless power supply system 400 may comprise a power supply device 401. Moreover, as illustrated in FIG. 2, the power supply device 401 includes a switch controller 418. Moreover, the switch controller 418 includes the capacitor voltage detector 118b, a phase comparator 418a, and a switch drive unit 418c.

Furthermore, the capacitor voltage detector 118b, similarly to the capacitor voltage detector 118b of the first example of the present invention, can acquire the waveform (voltage value and phase) of the capacitor voltage V_{C} of the resonant capacitor 111b.

The phase comparator 418a, based on the waveform of the capacitor voltage V_{C} and the comparison signal S2, calculates a time T4 of turning off the switch 117.

The switch drive unit 418c, based on the time T4 and the capacitor voltage V_{C}, turns the switch 117 on and off. Moreover, other configurations of the wireless power supply system 400 according to embodiments of the fourth example of the present invention are similar to those of the wireless power supply system 100 according to embodiments of the first example of the present invention.

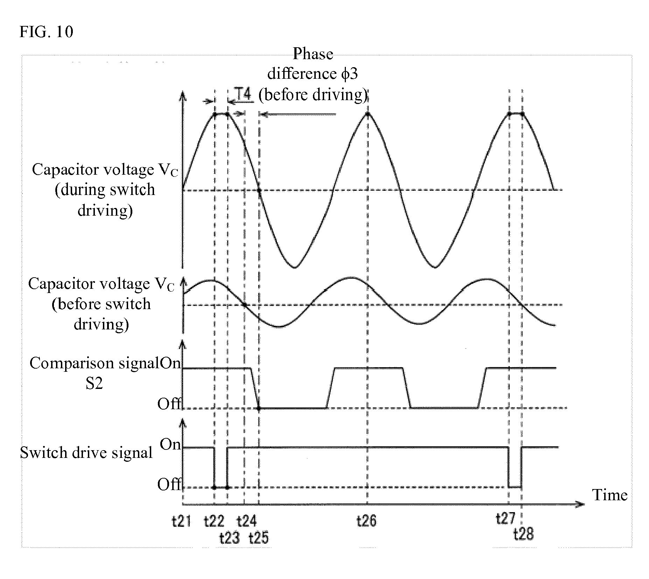

Next, operations of the wireless power supply system 400 in a situation where the switch 117 is driven so a phase difference φ3 between the phase of the drive signal S1 (comparison signal S2) that drives the resonant circuit 111 and the phase of the coil current I_{L} (capacitor voltage V_{C}) that flows through the power supply coil 111a becomes substantially 0 will be described with reference to FIG. 10. Control of driving of the switch 117 is performed by the switch controller 418.

According to one or more embodiments of the fourth example of the present invention, by turning the switch 117 off for the time T4 not at every point when the capacitor voltage V_{C} is at least maximized or minimized but at a portion of these points (points t22 and t27), the phase difference φ3 between the phase of the drive signal S1 and the phase of the coil current I_{L} that flows through the power supply coil 111a (phase difference φ3 between the phase of the comparison signal S2 and the capacitor voltage V_{C}) is made to be substantially 0. This will be described in detail below.

First, from point t21 to point t22, the capacitor voltage V_{C} gradually increases. Moreover, the comparison signal S2 is turned on. Then, at point t22, the capacitor voltage V_{C} becomes a maximum value.

Then, from point t22 to point t23, the switch 117 is turned off for the time T4. In this situation, in a period from point t22 to point t23, the capacitor voltage V_{C} does not change.

Then, after point t23, from point t27 to point t28, the switch 117 is turned off for the time T4. That is, at point t26, which is one period after point t23, the switch 117 is not turned off, and the switch 117 is turned on at point t27, which is two periods after point t23. As a result, the phase difference φ3 between the phase of the comparison signal S2 and the capacitor voltage V_{C} (phase difference φ3 between the phase of the drive signal S1 and the phase of the coil current I_{L} that flows through the power supply coil 111a) is made to be substantially 0.

Therefore, in the power supply device 401 according to emobodiments of the fourth example of the present invention as well, similarly to the power supply device 101 according to embodiments of the first example of the invention, the frequency of the capacitor voltage V_{C} (resonant frequency f2 of the resonant circuit 111) is artificially changed to a value equal to the drive frequency f1 of the drive signal S1.

According to one or more embodiments of the fourth example of the present invention, effects such as below can be obtained.

According to one or more embodiments of the fourth example of the present invention, as above, with the switch controller 418, by turning the switch 117 off for the time T4 not at every point when the capacitor voltage V_{C} is at least maximized or minimized but at a portion of these points (points t22 and t27), the phase difference φ3 between the phase of the drive signal S1 and the phase of the coil current I_{L} that flows through the power supply coil 111a (phase difference φ3 between the phase of the comparison signal S2 and the capacitor voltage V_{C}) is made to be substantially 0. Because a count of turning off the switch 117 can be reduced thereby, unlike a situation where the switch 117 is turned off for a predetermined time (time T2) at every point when the capacitor voltage V_{C} is at least maximized or minimized, loss of the energy E1 generated when the switch 117 is turned off can be further reduced. Moreover, other effects of the wireless power supply system 400 according to embodiments of the fourth example of the present invention are similar to those of the wireless power supply system 100 according to embodiments of the first example of the invention.

### (Fifth Example)

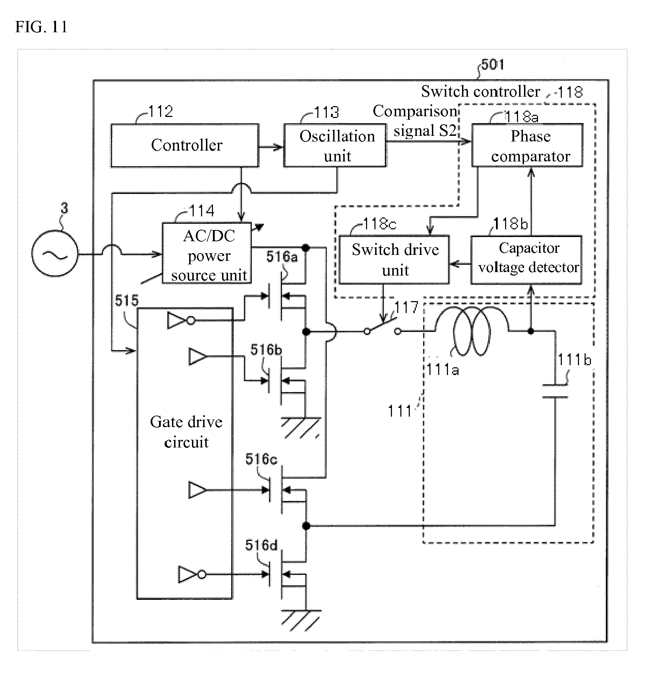

Next, a configuration of a wireless power supply system 500 according to a fifth example will be described with reference to FIG. 1 and FIG. 11. According to one or more embodiments of the fifth example of the present invention, unlike the wireless power supply system 100 of the first example provided with the switching circuit of the so-called half bridge type configured by the gate drive circuit and the two FETs, a switching circuit of a so-called H bridge type configured by a gate drive circuit and four FETs is provided.

As illustrated in FIG. 1, the wireless power supply system 500 according to embodiments of the fifth example of the present invention may comprise a power supply device 501. Moreover, as illustrated in FIG. 11, the power supply device 501 includes a gate drive circuit 515 and FETs 516a to 516d.

Furthermore, a drain of the FET 516a is connected to an output side of the AC/DC power source unit 114. Moreover, a source of the FET 516a and a drain of the FET 516b are connected to the switch 117. Moreover, a source of the FET 516b is grounded.

Furthermore, a drain of the FET 516c is connected to the output side of the AC/DC power source unit 114. Moreover, a source of the FET 516c and a drain of the FET 516d are connected to the power supply coil 111a. Moreover, a source of the FET 516d is grounded.

That is, the gate drive circuit 515 and the FETs 516a to 516d are configured as the so-called H bridge circuit; it converts a voltage of a direct current from the AC/DC power source unit 114 (for example, a voltage value Vt) into a voltage of an alternating current having the drive frequency f1 (rectangular wave having a voltage value +Vt and a voltage value -Vt) and outputs this to the resonant capacitor 111b and the power supply coil 111a.

Operations of the switch 117 and the switch controller 118 according to embodiments of the fifth example of the present invention are performed similarly to the operations of the switch 117 and the switch controller 118 according to embodiments of the first example (see FIG. 6). Moreover, other configurations of the wireless power supply system 500 according to embodiments of the fifth example of the present invention are similar to those of the wireless power supply system 100 according to embodiments of the first example of the invention.

According to one or more embodiments of the fifth example, effects such as below can be obtained.

According to one or more embodiments of the fifth example of the present invention, as above, the power supply device 501 may comprise the gate drive circuit 515 and the FETs 516a to 516d. As a result, the gate drive circuit 515 and the FETs 516a to 516d can be driven as the switching circuit of the so-called H bridge type. As a result, in a situation where power of the voltage value Vt is supplied from the AC/DC power source unit 114, compared to a situation where the switching circuit of the half bridge type is provided (0 to +Vt), a size of a voltage value supplied to the power supply coil 111a can be doubled (-Vt to +Vt). In this situation, because a greater alternating current can flow through the power supply coil 111a, a large powered magnetic field can be generated. Moreover, other effects of the wireless power supply system 500 according to embodiments of the fifth example of the present invention are similar to those of the wireless power supply system 100 according to embodiments of the first example of the invention.

### (Sixth Example)

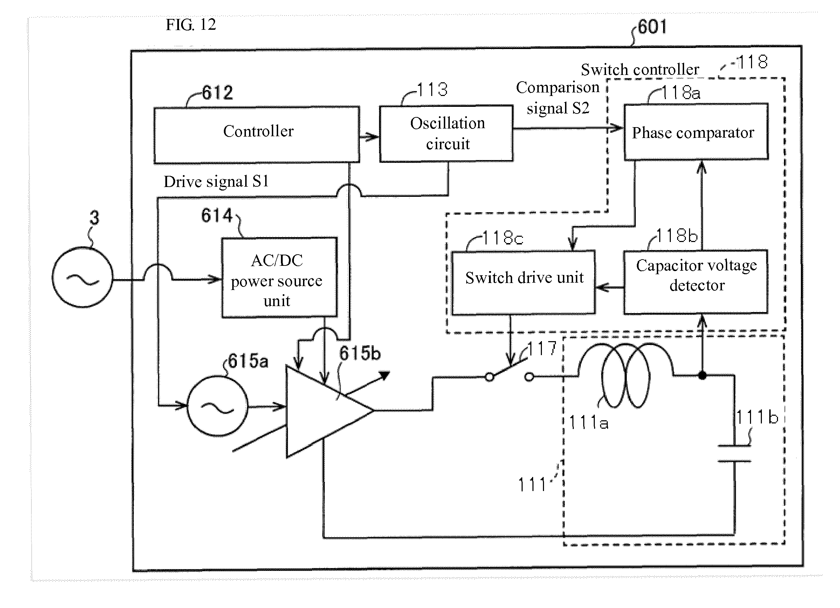

Next, a configuration of a wireless power supply system 600 according to a sixth example will be described with reference to FIG. 1 and FIG. 12. According to one or more embodiments of the sixth example of the present invention, unlike the wireless power supply system 100 of the first example provided with the so-called switching circuit made from the gate drive circuit and the FETs, a variable amplifier configured to be able to amplify an alternating current of a sine wave is provided.

As illustrated in FIG. 1, according to embodiments of the sixth example of the present invention, the wireless power supply system 600 may comprise a power supply device 601. Moreover, as illustrated in FIG. 12, the power supply device 601 may comprise a controller 612, an AC/DC power source unit 614, a sine wave generator 615a, and a variable amplifier 615b.

Furthermore, the AC/DC power source unit 614, unlike the AC/DC power source unit 114 according to embodiments of the first example of the present invention, outputs a constant voltage value. Moreover, the AC/DC power source unit 614 is connected to the variable amplifier 615b and supplies power to the variable amplifier 615b.

Furthermore, the sine wave generator 615a acquires the drive signal S1 from the oscillation circuit 113 and outputs a sine wave having the drive frequency f1 of the acquired drive signal S1. Moreover, an output side of the sine wave generator 615a is connected to an input side of the variable amplifier 615b.

Furthermore, the variable amplifier 615b acquires the sine wave having the drive frequency f1 from the sine wave generator 615a. Moreover, the variable amplifier 615b amplifies the acquired sine wave into power having a voltage value in accordance with a command from the controller 612 using the power supplied from the AC/DC power source unit 614. Moreover, the output side of the variable amplifier 615b is connected to the switch 117 and outputs power to the resonant capacitor 111b and the power supply coil 111a.

Operations of the switch 117 and the switch controller 118 according to embodiments of the sixth example of the present invention are performed similarly to the operations of the switch 117 and the switch controller 118 according to embodiments of the first example (see FIG. 6). Moreover, other configurations of the wireless power supply system 600 according to embodiments of the sixth example of the present invention are similar to those of the wireless power supply system 100 according to embodiments of the first example of the invention.

According to one or more embodiments of the sixth example of the present invention, effects such as below can be obtained.

According to one or more embodiments of the sixth example of the present invention, as above, the power supply device 601 may comprise the AC/DC power source unit 614, the sine wave generator 615a, and the variable amplifier 615b. As a result, the alternating voltage of the sine wave can be imparted to the power supply coil 111a. As a result, unlike the situation of using the switching circuit (the gate drive circuit 115 and the FET 116a and the FET 116b), high-frequency noise becomes less likely to be generated, and therefore, electromagnetic interference to surrounding equipment by the high-frequency noise can be reduced form increasing. Moreover, other effects of the wireless power supply system 600 according to embodiments of the sixth example of the present invention are similar to those of the wireless power supply system 100 according to embodiments of the first example of the invention.

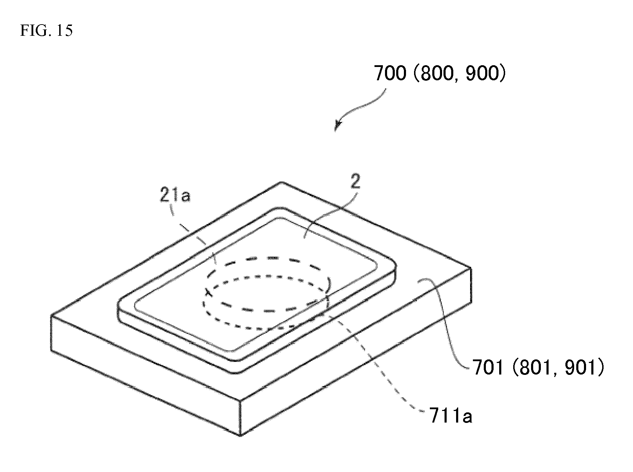

According to one or more embodiments of the first to sixth examples of the present invention, an example is illustrated where the power receiving device of embodiments of the present invention is applied in an electric automobile, but the present invention is not limited thereto. In embodiments of the present invention, the power receiving device may be applied to equipment other than an electric automobile. For example, it may be applied in a mobile phone device such as a smart phone such as that illustrated in FIG. 15 that will be described below.

### (Modified Example of First Example)

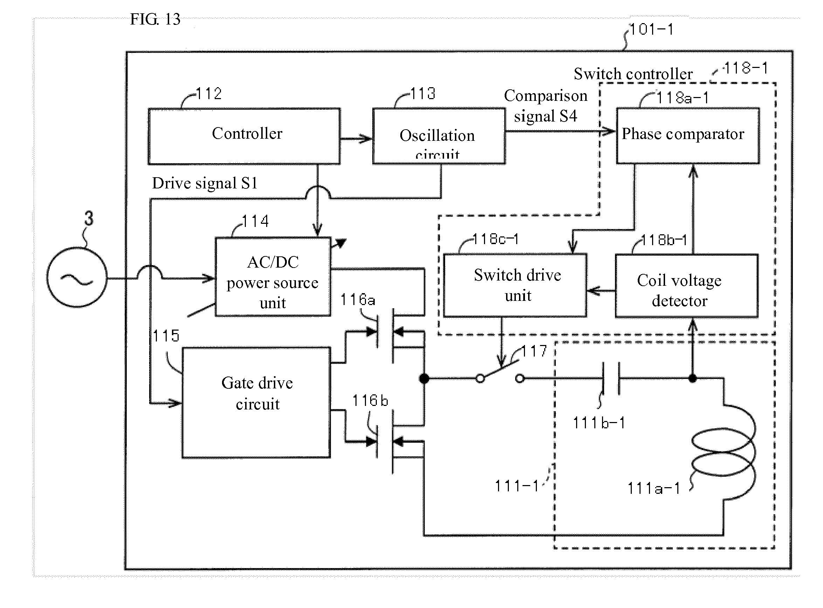

Furthermore, in embodiments of the first and third to sixth examples of the present invention, as the voltage phase detector of embodiments of the present invention, the capacitor voltage detector is provided and the phase difference between the phase of the capacitor voltage and the comparison signal is made to be acquired, but the present invention is not limited thereto. In the present invention, as the voltage phase detector, a coil voltage detector may be provided to acquire a phase difference between a phase of a coil voltage and the comparison signal. For example, in a power supply device 101-1 according to embodiments of a modified example of the first example of the present invention illustrated in FIG. 13, a coil voltage detector 118b-1 is provided.

According to embodiments of the modified example of the first example of the present invention, as illustrated in FIG. 13, the power supply device 101-1 may comprise a resonant circuit 111-1 and a coil voltage detector 118b-1. Moreover, the resonant circuit 111-1 includes a power coil 111a-1 and a resonant capacitor 111b-1. The coil voltage detector 118b-1 acquires a waveform of a coil voltage V_{L}. A phase difference between a phase of the coil voltage V_{L} and the phase of the coil current I_{L} that flows through the power supply coil 111a-1 is 90 degrees. The power supply device 101-1 artificially changes the resonant frequency f2 of the resonant circuit 111 to a value equal to the drive frequency f1 of the drive signal S1 by making the phase difference between a phase of a comparison signal S4 having a phase difference of 90 degrees with the drive signal S1 and the phase of the coil voltage V_{L}.

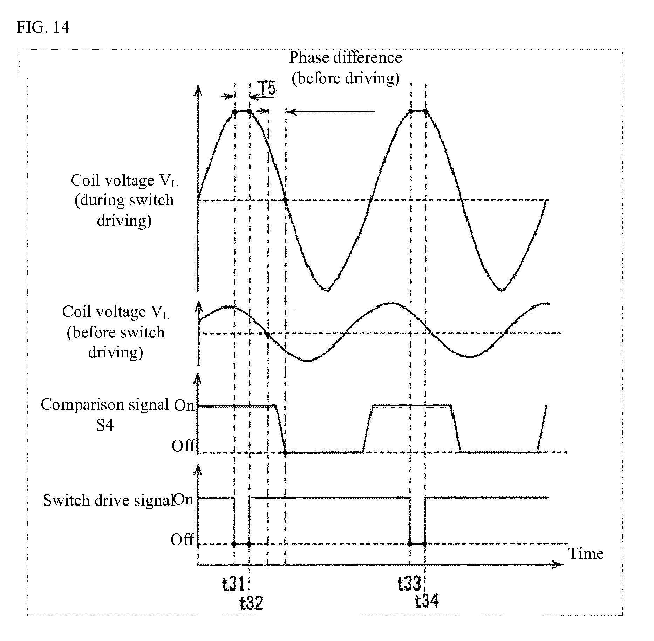

In one or more embodiments of the first to sixth examples of the present invention, an example is illustrated where the switch is turned off the predetermined time at every point when the voltage value of the resonant capacitor is maximized and minimized or at one point every two periods when the voltage value of the resonant capacitor is maximized, but the present invention is not limited thereto. In embodiments of the present invention, the switch may be configured to be turned off a predetermined time at every point when the voltage value of the resonant capacitor is maximized and minimized or at a point other than the one point every two periods when the voltage value of the resonant capacitor is maximized. For example, in the power supply device 101-1 according to embodiments of the modified example of the first example of the present invention illustrated in FIG. 13 and FIG. 14, the switch 117 is turned off a time T5 at one point every one period when the coil voltage value V_{L} of the power supply coil 111a-1 is maximized.

According to embodiments of the modified example of the first example of the present invention, as illustrated in FIG. 14, the power supply device 101-1 may comprise a switch controller 118-1. The switch controller 118-1 includes a phase comparator 718a, a coil voltage detector 118b-1, and a switch drive unit 718c. Moreover, the switch controller 118-1 turns off the switch 117 for the time T5 at every point when the coil voltage value V_{L} of the power supply coil 111a-1 is maximized (one point every one period, such as points t31 to t32 and points t33 to t34).

Furthermore, embodiments of the first to sixth examples of the present invention describe configurations separately, but a form of the present invention is not limited to the above embodiments. The present invention may be configured by combining embodiments of the first to sixth examples of the present invention with each other. For example, in one or more embodiments of the fourth to sixth examples of the present invention, an example is illustrated of providing the switch to enable switching between the state of cutting off and the state of conducting the resonant circuit, but the present invention is not limited thereto. In embodiments of the present invention, the configuration of one or more embodiments of the fourth to sixth examples of the present invention and the configuration of one or more embodiments of the second example of the present invention of providing the switch in parallel to the power supply coil and shorting both ends of the power supply coil may be combined.

### (Seventh Example)

A wireless power supply system 700 according to one or more embodiments of a seventh example of the present invention will be described with reference to FIG. 5 and FIG. 15 to FIG. 18.

As illustrated in FIG. 15, according to one or more embodiments of the seventh example of the present invention, the wireless power supply system 700 may comprise a power supply device 701. Moreover, the power supply device 701 is configured so the power receiving device 2 can be disposed on an upper surface of the power supply device 701. Moreover, a power supply coil 711a is disposed inside the power supply device 701. The power supply device 701 is an example of the "wireless power supply device" of the present invention.

The wireless power supply system 700 may comprise the power receiving device 2. The power receiving device 2 is disposed on the upper surface of the power supply device 701. Moreover, the power receiving device 2 includes the power receiving coil 21a. Moreover, when the power receiving device 2 is disposed on the upper surface of the power supply device 701, a power supply coil 711a and the power receiving coil 21a are provided so as to oppose each other. The power receiving device 2 illustrated in FIG. 15 is, for example, a mobile telephone device such as a smart phone.

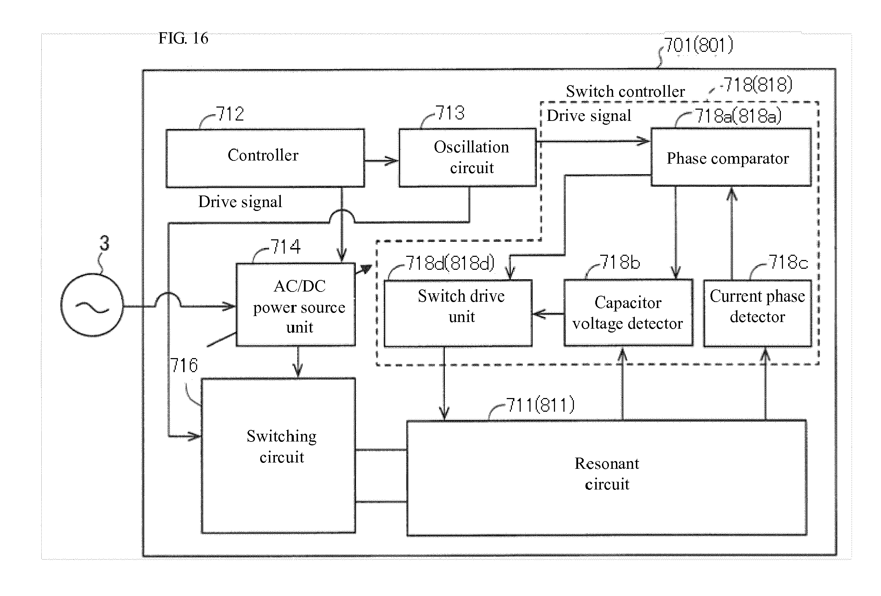

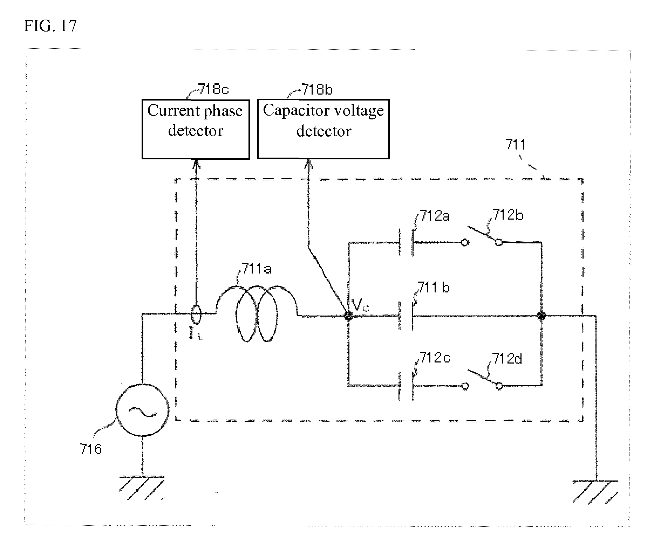

Furthermore, as illustrated in FIG. 16, the power supply device 701 may comprise a resonant circuit 711. Moreover, as illustrated in FIG. 17, the resonant circuit 711 includes the power supply coil 711a and a capacitor 711b.

According to one or more embodiments of the seventh example of the present invention, as illustrated in FIG. 17, the power supply coil 711a supplies power to the power receiving coil 21a by generating a powered magnetic field by power supplied from an AC/DC power source unit 714. Moreover, the resonant capacitor 711 b is connected to the power supply coil 711a in series, and in a situation where a voltage of an alternating current having a resonance frequency is applied, resonates in series (an impedance becomes minimized).

Furthermore, according to one or more embodiments of the seventh example of the present invention, the power supply device 701 may comprise a first sub capacitor 712a connected in parallel to the resonant capacitor 711b. Moreover, the power supply device 701 is connected in series to the first sub capacitor 712a and may comprise a first switch 712b that can switch between connection and disconnection between the resonant capacitor 711b and the first sub capacitor 712a.

Furthermore, the power supply device 701 may comprise a second sub capacitor 712c connected in parallel to the resonant capacitor 711b. Moreover, the power supply device 701 is connected in series to the second sub capacitor 712c and may comprise a second switch 712d that can switch between connection and disconnection between the resonant capacitor 711b and the second sub capacitor 712c.

The power supply device 701 includes a controller 712. The controller 712 includes a CPU and controls an entirety of the power supply device 701, such as an oscillation circuit 713 that will be described below.

The power supply device 701 includes the oscillation circuit 713. The oscillation circuit 713 outputs a drive signal having the high-frequency drive frequency f1 based on a command of the controller 712. Moreover, the high-frequency drive frequency f1 is set to a frequency established by a standard or the like. For example, the drive frequency f1 is set to 100 kHz.

According to one or more embodiments of the seventh example of the present invention, a capacitance value of the resonant capacitor 711b is a capacitance value such as one where the resonant frequency f2 of the power supply coil 711a and the resonant capacitor 711b (resonant circuit 711) becomes greater than the drive frequency f1 of the drive signal that drives the power supply coil 711a and the resonant capacitor 711b. That is, a size of an inductance of the power supply coil 711 a and a capacitance value of the resonant capacitor 711 b are set to values such that the resonant frequency f2 of the resonant circuit 711 becomes greater than the drive frequency f1 (100 kHz) of the drive signal. For example, in a situation where the inductance of the power supply coil 711a is 0.015 µH, the capacitance of the resonant capacitor 711b is configured to be 0.012 µF and the resonant frequency f2 of the resonant circuit 711 is set to be 119 kHz.

In this situation, the capacitance values of the first sub capacitor 712a and the second sub capacitor 712c are both set to 0.010 µF. Moreover, in a situation where the first switch 712b is turned on, by the capacitance values of the resonant capacitor 711b and the first sub capacitor 712a being synthesized, the capacitance value becomes 0.022 µF. As a result, when the first switch 712b is turned on, the resonant frequency f2 of the resonant circuit 711 becomes 88 kHz. Moreover, in a situation as well where the second switch 712d is turned on, similarly to the situation where the first switch 712b is turned on, when the second switch 712d is turned on, the resonant frequency f2 of the resonant circuit 711 becomes 88 kHz.

The power supply device 701 includes the AC/DC power source unit 714. The AC/DC power source unit 714 acquires power of an alternating current from the commercial power source 3 provided on the outside and rectifies the acquired power into a direct current to output the power. Moreover, the AC/DC power source unit 714 changes an output voltage value based on a command from the controller 712.

The power supply device 701 includes a switching circuit 716. The switching circuit 716 includes a plurality of FETs and turns on and off a direct current voltage applied to the resonant circuit 711 from the AC/DC power source unit 714. For example, the switching circuit 716 is configured as a so-called half bridge circuit, H bridge circuit, or the like. Moreover, the switching circuit 716 acquires the drive signal from the oscillation circuit 713, converts the voltage of a direct current from the AC/DC power source unit 714 into a voltage of an alternating current, and outputs this to the resonant capacitor 711b and the power supply coil 711a.

Furthermore, as illustrated in FIG. 16, the power supply device 701 includes a switch controller 718. Moreover, according to embodiments of the seventh example of the present invention, the switch controller 718 includes the phase comparator 718a that detects the phase difference φ1 between the phase of the drive signal that drives the power supply coil 711a and the resonant capacitor 711b and the phase of the coil current I_{L} that flows through the power supply coil 711a. The phase comparator 718a is an example of the "phase difference detector" of embodiments of the present invention.

Specifically, the switch controller 718 includes a capacitor voltage detector 718b, the current phase detector 718c, and a switch drive unit 718d. Moreover, as illustrated in FIG. 17, the current phase detector 718c detects a waveform (phase and current value) of the coil current I_{L} that flows through the power supply coil 711a. Moreover, the current phase detector 718c transmits the acquired waveform of the coil current I_{L} to the phase comparator 718a.

Furthermore, the capacitor voltage detector 718b can detect the voltage value of the capacitor voltage V_{C} of the resonant capacitor 711b and the phase of the capacitor voltage V_{C}. Moreover, the capacitor voltage detector 718b transmits the acquired waveform of the capacitor voltage V_{C} to the switch drive unit 718d.

As illustrated in FIG. 17, the switch drive unit 718d acquires the capacitor voltage V_{C} from the capacitor voltage detector 718b and acquires information of the time T1 (time when the first switch 712b and the second switch 712b are turned on) that will be described below from the phase comparator 718a. Moreover, the switch drive unit 718d turns the first switch 712b and the second switch 712b on and off based on the acquired capacitor voltage V_{C} and information of the time T 1.

According to one or more embodiments of the seventh example of the present invention, the switch controller 718 controls the time T1 when the first switch 712b and the second switch 712d are turned on so the phase difference φ1 between the phase of the drive signal detected by the phase comparator 718a and the phase of the coil current I_{L} that flows through the power supply coil 711a becomes substantially 0.

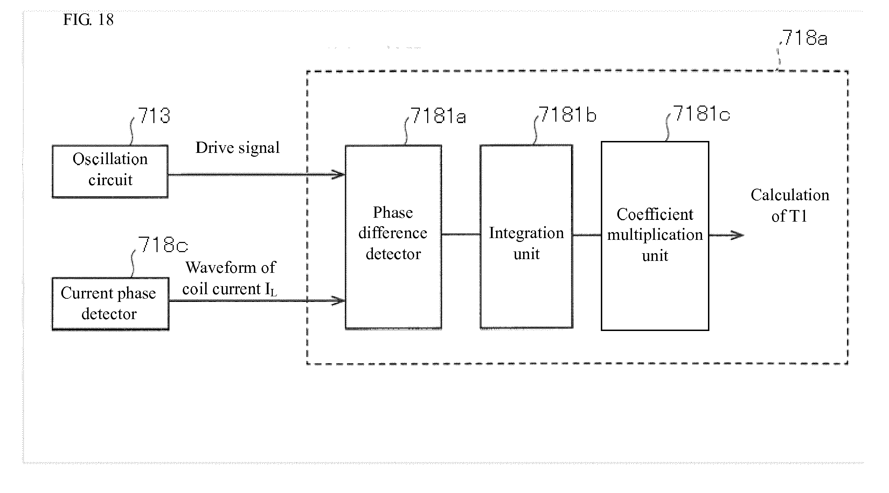

Specifically, as illustrated in FIG. 18, the phase comparator 718a of the switch controller 718 includes a phase difference detector 7181a, an integration unit 7181b, and a coefficient multiplication unit 7181 c. The phase difference detector 7181 a acquires the drive signal from the oscillation circuit 713. Moreover, the phase difference detector 7181a acquires the waveform of the coil current I_{L} from the current phase detector 718c. Moreover, the phase difference detector 7181 a detects the phase difference φ1 by comparing the acquired drive signal and the acquired coil current I_{L}.

The integration unit 7181b acquires the phase difference φ1 from the phase difference detector 7181 a and performs integration. Moreover, the coefficient multiplication unit 7181c calculates the time T1 of turning on the first switch 712b and the second switch 712d by multiplying a predetermined coefficient to the value of the phase difference φ1 integrated by the integration unit 7181b. That is, the phase comparator 718a performs so-called PI control.

For example, in a situation where the phase difference φ1 does not become substantially 0 after the switch drive unit 718d turns on the first switch 712b and the second switch 712d for the time T1, with the phase comparator 718a, a value based on the phase difference φ1 that is not substantially 0 is added to (subtracted from) the time T1. Moreover, by repeating this addition (subtraction), the time T1 converges into a predetermined time, and the phase difference φ1 becomes substantially 0.

According to one or more embodiments of the seventh to ninth examples of the present invention, for example, the power receiving device 2 may comprise the configuration illustrated in FIG. 5. The power receiving coil 21a receives power by the powered magnetic field generated by the power supply coil 711 a.

Furthermore, the resonant frequency f3 of the resonant circuit 21, similarly to the drive frequency f1 of the drive signal of the power supply device 701, is set to a frequency (for example, 100 kHz) established by a standard (for example, Qi standard) or the like.

(On Operations Previous to Driving First Switch 712b and Second Switch 712d to Make Phase Difference φ1 between Phase of Drive Signal and Phase of Coil Current I_{L} Substantially 0)

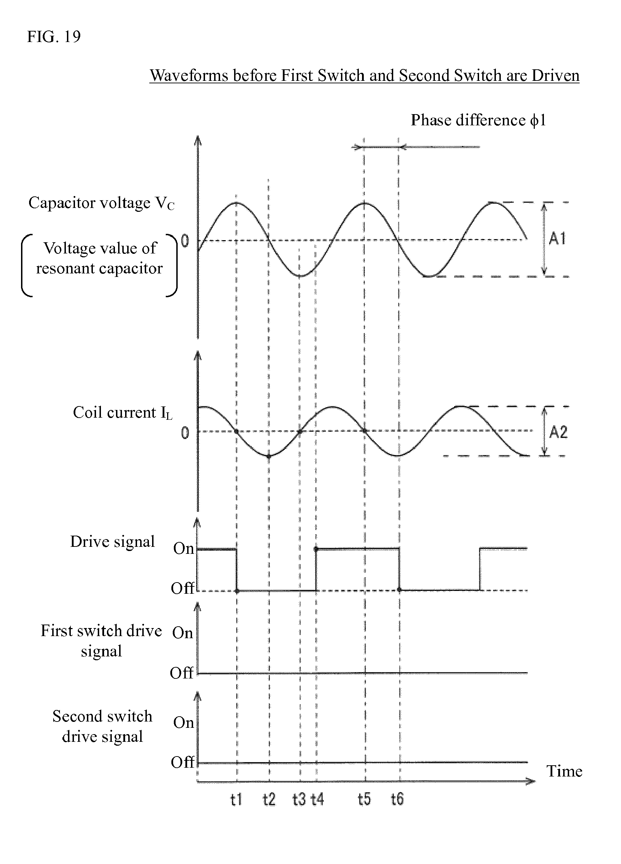

Next, operations of the wireless power supply system 700 before the first switch 712b and the second switch 712d are driven will be described with reference to FIG. 19. That is, a state where the phase difference φ1 between the phase of the drive signal and the phase of the coil current I_{L} is not 0 will be described.

First, at point t1, the voltage value of the capacitor voltage V_{C} (voltage value of resonant capacitor 711b) becomes a maximum value (peak). Moreover, the current value of the coil current I_{L} is 0. Then, the drive signal is turned off. Then, from point t1 to point t2, the capacitor voltage V_{C} and the coil current I_{L} gradually decrease. Then, at point t2, the capacitor voltage V_{C} becomes 0, and the current value of the coil current I_{L} becomes a minimum value (peak).

Then, at point t3, the capacitor voltage V_{C} becomes a minimum value, and the current value of the coil current I_{L} becomes 0. Then, because the resonant frequency f2 (for example, 119 kHz) of the resonant circuit 711 is greater than the drive frequency f1 (for example, 100 kHz) of the drive signal, the drive signal is turned on at point t4 (after point t3).

Then, at point t5, the capacitor voltage V_{C} becomes the maximum value. Then, the coil current I_{L} becomes 0. That is, a period of the capacitor voltage V_{C} and the coil current I_{L} is from point t1 to point t5. Meanwhile, at point t6, the drive signal is turned off. That is, a period of the drive signal is from point t1 to point t6. In this situation, the phase difference φ1 between the phase of the coil current I_{L} and the phase of the drive signal corresponds to a time difference between point t5 and point t6.

Furthermore, the capacitor voltage V_{C} of the wireless power supply system 700 before the first switch 712b and the second switch 712d are driven includes the amplitude A1. Moreover, the coil current I_{L} includes the amplitude A2.

(On Operations of Driving First Switch 712b and Second Switch 712d to Make Phase Difference φ1 between Phase of Drive Signal and Phase of Coil Current I_{L} Substantially 0)

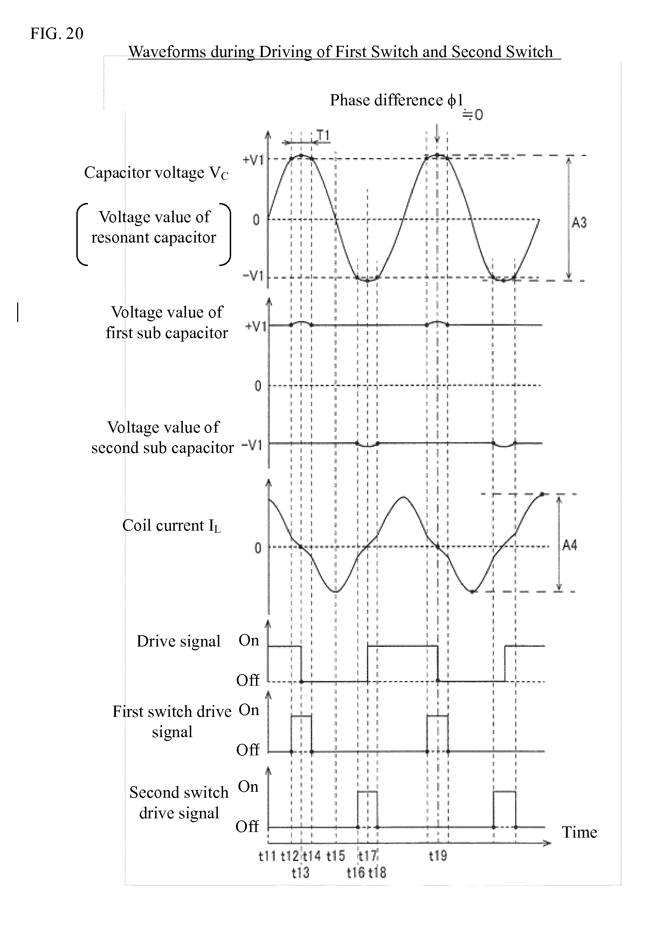

Next, operations of the wireless power supply system 700 in a situation where the first switch 712b and the second switch 712d according to embodiments of the seventh example of the present invention are driven so the phase difference φ1 between the phase of the drive signal that drives the resonant circuit 711 and the phase of the coil current I_{L} that flows through the power supply coil 711a becomes substantially 0 will be described with reference to FIG. 20. Control of driving of the first switch 712b and the second switch 712d is performed by the switch controller 718.

First, at point t11, it is supposed that the voltage value of the capacitor voltage V_{C} (resonant capacitor 711b) is 0 and the current value of the coil current I_{L} is the maximum value (peak). Moreover, the voltage value of the first sub capacitor 712a is +V1, and the voltage value of the second sub capacitor 712c is -V1.

Then, from point t11 to point t12, the capacitor voltage V_{C} gradually increases. Then, the coil current I_{L} gradually decreases. Moreover, the drive signal is turned on.

According to one or more embodiments of the seventh example of the present invention, the first switch 712b is turned on when the voltage value of the capacitor voltage V_{C} is become a voltage value (+V1) substantially equal to the voltage value of the first sub capacitor 712a near a maximum.

Specifically, at point t12, the capacitor voltage V_{C} becomes +V1. That is, the voltage value of the resonant capacitor 711b and the voltage value of the first sub capacitor 712a become substantially equal voltage values (+V1). Then, at point t12, by a first switch drive signal being turned on by the switch drive unit 718d (put into a high state), the first switch 712b is turned on, and the resonant capacitor 711b and the first sub capacitor 712a are connected. As a result, the resonant frequency of the resonant circuit 711 decreases (for example, in the above example, it changes from 119 kHz to 88 kHz).

Furthermore, from point t12 to point t13, the voltage values of the capacitor voltage V_{C} and the first sub capacitor 712a gradually increase. Then, at point t13, the voltage values of the capacitor voltage V_{C} and the first sub capacitor 712a become maximum values. Moreover, the coil current I_{L} becomes 0. Moreover, the drive signal is also turned off.

According to one or more embodiments of the seventh example of the present invention, the time T1 of turning on the first switch 712b is controlled so after turning on the first switch 712b when the voltage value of the resonant capacitor 711b and the voltage value of the first sub capacitor 712a are become substantially equal voltage values (+V1), the first switch 712b is turned off at point t14 when the voltage value (+V1) of when the first switch 712b is turned on is again achieved while remaining when the voltage value of the resonant capacitor 711b and the voltage value of the first sub capacitor 712a are substantially equal voltage values.

From point t13 to point t14, the voltage values of the capacitor voltage V_{C} and the first sub capacitor 712a gradually decrease when remaining in the state of being substantially equal voltage values.

Then, at point t14, both the voltage value of the resonant capacitor 711b and the voltage value of the first sub capacitor 712a become +V1. Moreover, the first switch 712b is turned off. That is, when the voltage value (+V1) of when the first switch 712b is turned on is again achieved, the resonant capacitor 711b and the first sub capacitor 712a are cut off. As a result, the resonant frequency of the resonant circuit 711 returns to an original size (for example, in the above example, it changes from 88 kHz to 119 kHz). The period from point t12 to point t13 (point when the drive signal is turned off) and the period from point t13 to point t14 become substantially the same period.

As a result, the first switch 712b can be turned on and off when the voltage value of the first sub capacitor 712a is continuously +V1 (zero voltage switching).

Then, from point t14 to point t15, the voltage value of the capacitor voltage V_{C} gradually decreases. Moreover, with the voltage value of the first sub capacitor 712a, the state of +V1 is maintained. Moreover, the coil current I_{L} gradually decreases. Then, at point t15, the voltage value of the capacitor voltage V_{C} becomes 0, and the coil current value I_{L} becomes a minimum value (peak).

According to one or more embodiments of the seventh example of the present invention, the second switch 712d is turned on when the voltage value of the capacitor voltage V_{C} becomes a voltage value substantially equal to the voltage value of the second sub capacitor 712c near a minimum.

Specifically, from point t15 to point t16, the voltage value of the capacitor voltage V_{C} gradually decreases. Moreover, the coil current I_{L} gradually increases. Moreover, the voltage value of the second sub capacitor 712c is -V1. Moreover, at point t6, the voltage value of the capacitor voltage V_{C} becomes -VI, which is a voltage value substantially equal to -VI, the voltage value of the second sub capacitor 712c. Moreover, the second switch 712d is turned on. As a result, the resonant frequency f2 of the resonant circuit 711 is changed to increase.

Then, from point t16 to point t17, the voltage values of the resonant capacitor 711b and the second sub capacitor 712c gradually decrease. Then, at point t17, the voltage values of the resonant capacitor 711b and the second sub capacitor 712c become minimum values. Then, the coil current I_{L} becomes 0. Moreover, the drive signal is turned on.

From point t17 to point t18, the voltage values of the resonant capacitor 711b and the second sub capacitor 712c gradually increase while remaining in the state of being substantially equal voltage values.

Then, at point t18, both the voltage value of the resonant capacitor 711b and the voltage value of the second sub capacitor 712c become -V1. Moreover, the second switch 712d is turned off. That is, when the voltage value (-V1) of when the second switch 712d is turned on is again achieved, the resonant capacitor 711b and the second sub capacitor 712c are cut off. As a result, the resonant frequency of the resonant circuit 711 is returned to the original size.

Then, at point t19, the voltage value of the capacitor voltage V_{C} becomes a maximum value. That is, a period of the waveform of the voltage (capacitor voltage V_{C}) of the resonant capacitor 711b becomes from point t13 to point t19. Moreover, the current value of the coil current I_{L} becomes 0 at point t19. That is, the period of the waveform of the coil current I_{L} also becomes from point t13 to point t19. Moreover, the drive signal is turned off at point t19. Therefore, the period of the drive signal also becomes from point t13 to point t19. That is, the periods of the capacitor voltage V_{C}, the coil current I_{L}, and the drive signal become substantially equal sizes, and the phase difference φ1 between the phase of the drive signal that drives the resonant circuit 711 and the phase of the coil current I_{L} that flows through the power supply coil 711a becomes substantially 0.

Therefore, the resonant frequency f2 of the resonant circuit 711 artificially becomes a size substantially equal to the drive frequency f1 of the drive signal (resonant frequency f3 of the power receiving device 2).

Furthermore, the waveform of the voltage (capacitor voltage V_{C}) of the resonant capacitor 711b may comprise an amplitude A3. Moreover, the amplitude A3 becomes greater than the amplitude A1 (see FIG. 19) before driving of the first switch 712b and the second switch 712d. That is, the drive frequency f1 and the resonant frequency f2 of the resonant circuit 711 becoming equal values signifies that an impedance of the resonant circuit 711 is decreased compared to before the first switch 712b and the second switch 712d are driven. The waveform of the coil current I_{L} includes an amplitude A4. Moreover, the amplitude A4 also becomes greater than the amplitude A2 (see FIG. 19) before driving of the first switch 712b and the second switch 712d due to a reason similar to the reason why the amplitude A3 is become greater than the amplitude A1.

According to one or more embodiments of the seventh example of the present invention, effects such as below can be obtained.

According to one or more embodiments of the seventh example of the present invention, as above, the first sub capacitor 712a and the second sub capacitor 712c are connected in parallel to the resonant capacitor 711b. The first switch 712b is connected in series to the first sub capacitor 712a and switches between connection and disconnection between the resonant capacitor 711b and the first sub capacitor 712a. The second switch 712d is connected in series to the second sub capacitor 712c and switches between connection and disconnection between the resonant capacitor 71 1b and the second sub capacitor 712c. As a result, while the resonant capacitor 711b and the first sub capacitor 712a or second sub capacitor 712c are connected, capacitance values of the resonant capacitor 711b and the first sub capacitor 712a or second sub capacitor 712c are synthesized, and the capacitance value increases. As a result, compared to a state where the resonant capacitor 711b and the first sub capacitor 712a or second sub capacitor 712c are disconnected, the resonant frequency f2 of the power supply device 701, which is proportional to the inverse of the square root of the capacitance value, can be decreased.

Furthermore, the switch controller 718 is configured to control the time T1 when the first switch 712b and the second switch 712d are turned on. As a result, the resonant frequency f2 of the power supply device 701 can be changed according to the time T1 of turning on the first switch 712b and the second switch 712d. As a result, the resonant frequency f2 of the power supply device 701 and the resonant frequency f3 of the power receiving device 2 can artificially be made to substantially match.

Furthermore, the switch controller 718 is configured to perform the control of turning on the first switch 712b or the second switch 712d when the voltage value of the resonant capacitor 711b (capacitor voltage V_{C}) and the voltage value of the first sub capacitor 712a (+V1) or voltage value of the second sub capacitor 712c (-V1) are become substantially equal voltage values. As a result, compared to a situation of turning on the first switch 712b or the second switch 712d when the voltage value of the resonant capacitor 711 b (capacitor voltage V_{C}) and the voltage value of the first sub capacitor 712a or voltage value of the second sub capacitor 712c are different, the first switch 712b or the second switch 712d can be turned on without disrupting the waveform (frequency) of the voltage applied to the resonant capacitor 711b, and energy being lost when the first switch 712b or the second switch 712d is turned on can be reduced. As a result, transmission efficiency of power in power supply to the power receiving device 2 from the power supply device 701 can be better maintained.

Furthermore, according to one or more embodiments of the seventh example of the present invention, as above, the capacitance value of the resonant capacitor 711b is configured to be a capacitance value such as one where the resonant frequency f2 of the power supply coil 711a and the resonant capacitor 711b becomes greater than the drive frequency f1 of the drive signal that drives the power supply coil 711a and the resonant capacitor 711b. For example, the capacitance value of the resonant capacitor 711b is configured to be 0.012 µF so the resonant frequency f2 becomes 119 kHz relative to the drive frequency of 100 kHz. Because the resonant frequency f2 of the power supply device 701 thereby becomes greater than the drive frequency f1 of the drive signal, by decreasing the resonant frequency f2 of the power supply device 701 during the time T1 of turning on the first switch 712b or the second switch 712d (for example, making it 88 kHz), the resonant frequency f2 of the power supply device 701 and the resonant frequency f3 of the power receiving device 2 (drive frequency f1 of the drive signal) can easily be artificially substantially matched.

Furthermore, according to one or more embodiments of the seventh example of the present invention, as above, the power supply device 701 may comprise the first sub capacitor 712a and the second sub capacitor 712c, which are respectively connected in parallel to the resonant capacitor 711b. Moreover, the power supply device 701 may comprise the first switch 712b connected to the first sub capacitor 712a and the second switch 712d connected to the second sub capacitor 712c. Moreover, the switch controller 718 performs the control of turning on the first switch 712b when the voltage value of the resonant capacitor 711b (capacitor voltage V_{C}) is become the voltage value (+V1) that is near the maximum and substantially equal to the voltage value of the first sub capacitor 712a and turning on the second switch 712d when the voltage value of the resonant capacitor 711b (capacitor voltage V_{C}) is become the voltage value (-V1) that is near the minimum and substantially equal to the voltage value of the second sub capacitor 712c.

Because the first switch 712b is thereby turned on and off when the voltage value of the resonant capacitor 711b is become near the maximum, with the first sub capacitor 712a, the voltage value (+V1) near the maximum of the voltage value of the resonant capacitor 711b is maintained. Moreover, because the second switch 712d is turned on and off when the voltage value of the resonant capacitor 711b is become near the minimum, with the second sub capacitor 712c, the voltage value (-V1) near the minimum of the voltage value of the resonant capacitor 711b is maintained. As a result, the resonant frequency f2 can be changed twice total from among the waveform of the voltage (capacitor voltage V_{C}) applied to the resonant capacitor 711b: point t12, when the voltage value of the resonant capacitor 711b and the voltage value of the first sub capacitor 712a become substantially equal voltage values; point t16, when the voltage value of the resonant capacitor 711b and the voltage value of the second sub capacitor 712c become substantially equal voltage values. As a result, the resonant frequency f2 of the power supply device 701 and the resonant frequency f3 (drive frequency f1) of the power receiving device 2 can be substantially matched more reliably.

Furthermore, according to one or more embodiments of the seventh example of the present invention, as above, the switch controller 718 is configured to control the time T1 of turning on the first switch 712b so after turning on the first switch 712b when the voltage value of the resonant capacitor 711 b (capacitor voltage V_{C}) and the voltage value of the first sub capacitor 712a are become substantially equal voltage values (from point t12 to point t14), the first switch 712b is turned off at point t14 when the voltage value of when the switch is turned on is again achieved while remaining when the voltage value of the resonant capacitor 711b and the voltage value of the first sub capacitor 712a are substantially equal voltage values. As a result, the voltage value (+V1) of the resonant capacitor 711b and the first sub capacitor 712a at point t12 when the first switch 712b is turned on and the voltage value (+V1) of the resonant capacitor 711b and the first sub capacitor 712a at point t14 when the first switch 712b is turned off can be matched. As a result, the voltage value (+V1) of the first sub capacitor 712a before the first switch 712b is turned on (before point t12) and the voltage value (+V1) of the first sub capacitor 712a after the first switch 712b is turned on and off can be substantially matched. Because the first switch 712b can thereby perform zero voltage switching, loss of energy generated when the first switch 712b is turned on and off can be reduced.

According to one or more embodiments of the seventh example of the present invention, as above, the power supply device 701 includes the phase comparator 718a that detects the phase difference φ1 between the phase of the drive signal that drives the power supply coil 711a and the resonant capacitor 711b and the phase of the coil current I_{L} that flows through the power supply coil 711a. Moreover, the switch controller 718 is configured to control the time T1 of turning on the first switch 712b and the second switch 712d so the first switch 712b (second switch 712d) is turned on when the voltage value of the resonant capacitor 711b and the voltage value of the first sub capacitor 712a (second sub capacitor 712c) are become substantially equal voltage values and the phase difference φ1 between the phase of the drive signal detected by the phase comparator 718a and the phase of the coil current I_{L} becomes substantially 0. Here, the drive frequency f1 of the drive signal and the resonant frequency f3 of the power receiving device 2 are set to substantially equal values. Therefore, because by configuring as above, the state where the phase difference φ1 between the phase of the drive signal and the phase of the coil current I_{L} becomes the state where the resonant frequency f2 of the power supply device 701 and the drive frequency f1 of the drive signal become substantially equal, the resonant frequency f1 of the power supply device 701 and the resonant frequency f3 of the power receiving device 2 can easily be substantially matched.

### (Eighth Example)

A wireless power supply system 800 according to one or more embodiments of an eighth example of the present invention will be described with reference to FIG. 15, FIG. 16, and FIG. 21. According to one or more embodiments of the eighth example of the present invention, a first diode unit and a second diode unit connected in parallel to a first switch and a second switch are further provided.

As illustrated in FIG. 15, according to embodiments of the eighth example of the present invention, the wireless power supply system 800 may comprise a power supply device 801.

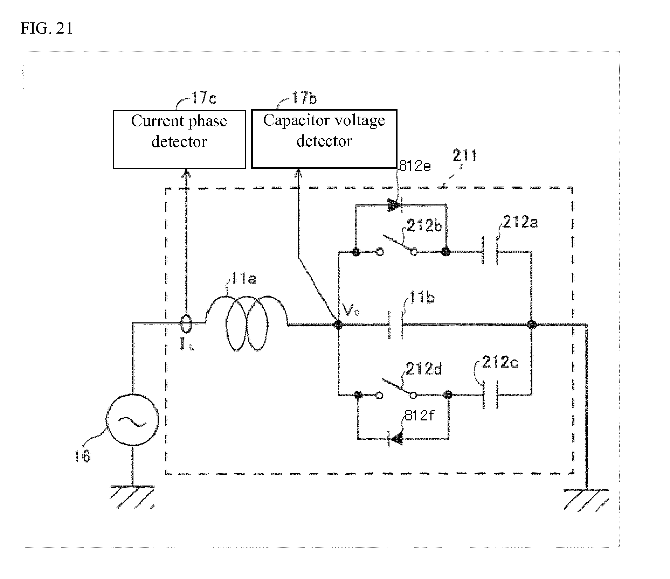

As illustrated in FIG. 16, the power supply device 801 may comprise a resonant circuit 811. According to one or more embodiments of the eighth example of the present invention, as illustrated in FIG. 21, the resonant circuit 811 includes a first diode unit 812e connected in parallel to a first switch 812b and a second diode unit 812f connected in parallel to a second switch 812d.

Specifically, the anode of the first diode unit 812e is disposed so as to be connected to the resonant capacitor 711b. Moreover, the cathode of the first diode unit 812e is disposed so as to be connected to a first sub capacitor 812a. As a result, it becomes possible for current to flow through the first sub capacitor from the resonant capacitor 711b even when the first switch 812b is turned off.

Furthermore, the cathode of the second diode unit 812f is disposed so as to be connected to the resonant capacitor 711b. Moreover, the anode of the second diode unit 812f is disposed so as to be connected to a second sub capacitor 812c. As a result, it becomes possible for current to flow through the resonant capacitor 711b from the second sub capacitor 812c even when the second switch 812d is turned off.

Furthermore, as illustrated, in FIG. 16, the power supply device 801 may comprise a switch controller 818. The switch controller 818 includes the capacitor voltage detector 718b, the current phase detector 718c, a phase comparator 818a, and a switch drive unit 818d. Moreover, the phase comparator 818a, based on detection results by the capacitor voltage detector 718b and the current phase detector 718c, calculates the time T2 for making the phase difference φ2 between the phase of the drive signal and the phase of the coil current I_{L} become substantially 0.

Furthermore, the switch drive unit 818d turns on the first switch 812b and the second switch 812d for the time T3, which is a time shorter than the time T2 by a predetermined amount. Moreover, other configurations of the wireless power supply system 800 according to embodiments of the eighth example of the present invention are similar to those of the wireless power supply system 700 according to embodiments of the seventh example of the present invention.

(Operations of Driving First Switch 812b and Second Switch 812d to Make Phase Difference φ2 between Phase of Drive Signal and Phase of Coil Current I_{L} Substantially 0)

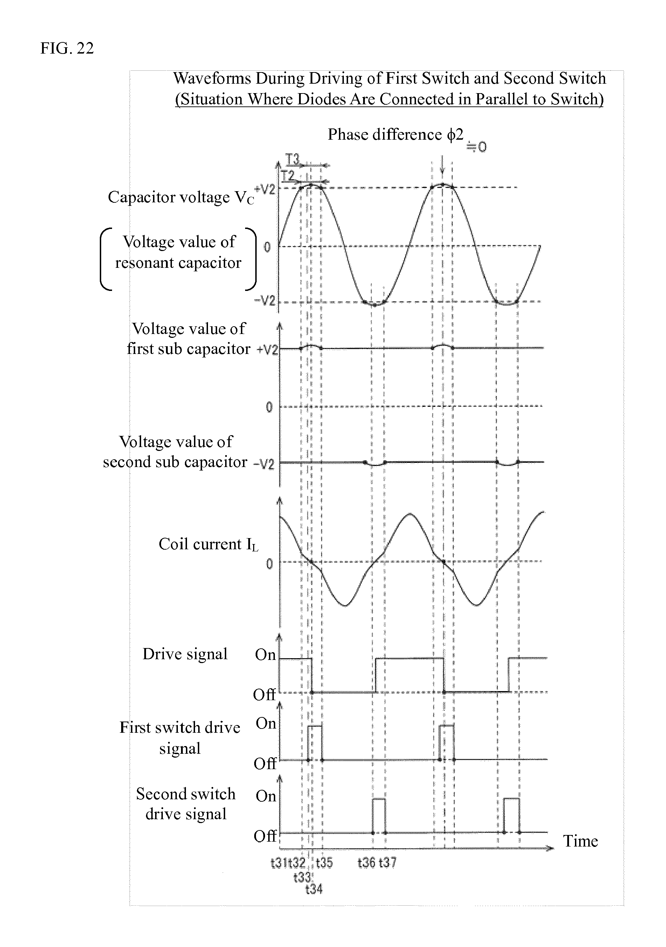

Next, operations of the wireless power supply system 800 in a situation where the first switch 812b and the second switch 812d according to embodiments of the eighth example of the present invention are driven so the phase difference φ2 between the phase of the drive signal that drives the resonant circuit 811 and the phase of the coil current I_{L} that flows through the power supply coil 711a becomes substantially 0 will be described with reference to FIG. 22. Control of driving of the first switch 812b and the second switch 812d is performed by the switch controller 818.

First, at point t31, it is supposed that the voltage value of the capacitor voltage V_{C} is 0 and the current value of the coil current I_{L} is a maximum value (peak). Moreover, the voltage value of the first sub capacitor 812a is +V2, and the voltage value of the second sub capacitor 812c is -V2.

Then, from point t31 to point t32, the capacitor voltage V_{C} gradually increases. Moreover, the coil current I_{L} gradually decreases. Moreover, the drive signal is turned on. Moreover, at point t32, the capacitor voltage V_{C} becomes +V2. That is, the voltage value of the resonant capacitor 711b (capacitor voltage V_{C}) and the voltage value of the first sub capacitor 812a become substantially equal voltage values (+V2).

Then, from point t32 to point t34, because current flows through the first sub capacitor 812a from the resonant capacitor 711b via the first diode unit 812e, the voltage value of the resonant capacitor 711b and the voltage value of the first sub capacitor 812a gradually increase in a state of being substantially the same. According to one or more embodiments of the eighth example of the present invention, the first switch 812b is turned on at point t33 between point t32 and point t34.

Then, at point 34, the voltage value of the resonant capacitor 711b and the voltage value of the first sub capacitor 812a become a maximum value (peak). Moreover, the coil current I_{L} becomes 0. Moreover, the drive signal is also turned off.

From point t34 to point t35, the voltage value of the resonant capacitor 711b and the voltage value of the first sub capacitor 812a gradually decrease while remaining in a state of being substantially equal voltage values.

Then, at point t35, both the voltage value of the resonant capacitor 711b and the voltage value of the first sub capacitor 812a become +V2. While the voltage value of the resonant capacitor 711b and the voltage value of the first sub capacitor 812a are substantially equal voltage values, a resonant frequency f4 of the resonant circuit 811 decreases (for example, in the above example, it is changed from 119 kHz to 88 kHz). Moreover, the time interval between point t32 and point t35 is the time T2. Moreover, the time interval between point t33 and point t35 is the time T3.

Furthermore, at point t35, the first switch 812b is turned off, and the resonant capacitor 711b and the first sub capacitor 812a are cut off. Moreover, no current flows from the first sub capacitor 812a to the resonant capacitor 711b via the first diode unit 812e. As a result, the resonant frequency f4 of the resonant circuit 811 returns to an original size (for example, in the above example, it changes from 88 kHz to 119 kHz).

The second switch 812d, similarly to the first switch 812b, is turned on at point t36 and turned off at point t37.

Because the phase difference φ2 between the phase of the drive signal that drives the resonant circuit 811 and the phase of the coil current I_{L} that flows through the power supply coil 711a thereby becomes substantially 0 in the power supply device 801 according to embodiments of the eighth example of the present invention as well, the resonant frequency f4 of the resonant circuit 811 artificially becomes a size substantially equal to the drive frequency f1 of the drive signal (resonant frequency f3 of the power receiving device 2).

According to one or more embodiments of the eighth example of the present invention, effects such as below can be obtained.

According to one or more embodiments of the eighth example of the present invention, as above, the resonant circuit 811 includes the first diode unit 812e connected in parallel to the first switch 812b and the second diode unit 812f connected in parallel to the second switch 812d. As a result, current can flow unidirectionally (from the resonant capacitor 711 b to the first sub capacitor 812a) via the first diode unit 812e even when the first switch 812b is turned off. Moreover, current can flow unidirectionally (from the second sub capacitor 812c to the resonant capacitor 711b) via the second diode unit 812f even when the second switch 812d is turned off.

As a result, even in a situation where the first switch 812b or the second switch 812d is turned on later than point t32 or point t36 when the voltage value of the resonant capacitor 711b and the voltage value of the first sub capacitor 812a or the second sub capacitor 812c are substantially equal voltage values (+V2 or -V2), the resonant capacitor 711b and the first sub capacitor 812a or second sub capacitor 812c can be connected when the voltage value of the resonant capacitor 711b and the resonant value of the first sub capacitor 812a or the voltage value of the second sub capacitor 812c are become substantially equal voltage values. As a result, loss of energy of when the first switch 812b and the second switch 812d are turned on can be more reliably reduced. Moreover, other effects of the wireless power supply system 800 according to embodiments of the eighth example of the present invention are similar to those of the wireless power supply system 700 according to embodiments of the seventh example of the present invention.

### (Ninth Example)

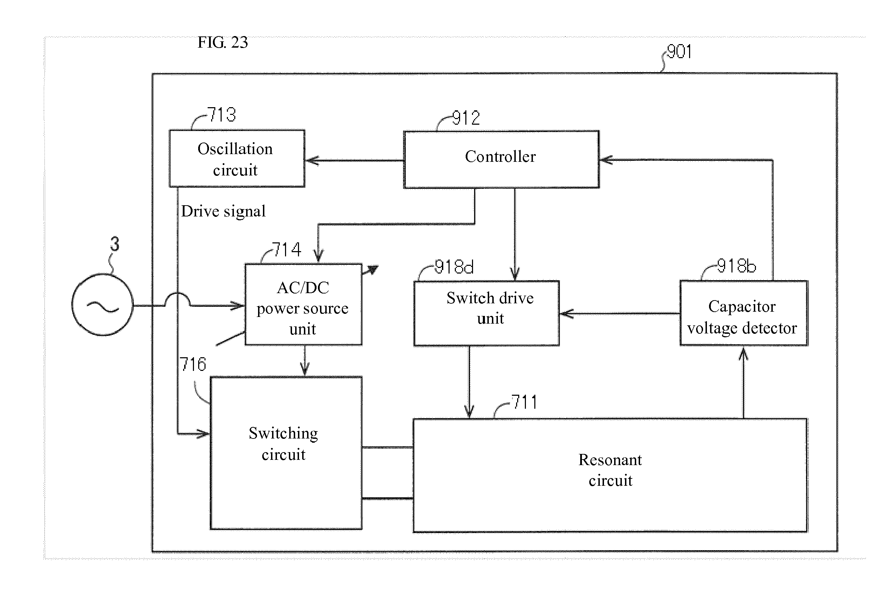

A wireless power supply system 900 according to one or more embodiments of a ninth example of the present invention will be described with reference to FIG. 15 and FIG. 23. In embodiments of the ninth example of the present invention, unlike the wireless power supply system 700 according to embodiments of the seventh example of the present invention configured so the duration of the first switch and the second switch being on are controlled so the phase difference between the phase of the drive signal and the phase of the coil current becomes substantially 0, the duration of the first switch and the second switch being on is controlled based on a value of the voltage value of the capacitor voltage before and after the duration of the first switch and the second switch being on is changed.

As illustrated in FIG. 15, according to embodiments of the ninth example of the present invention, the wireless power supply system may comprise a power supply device 901.

Furthermore, as illustrated in FIG. 23, the power supply device 901 includes a controller 912. The controller 912 controls an entirety of the power supply device 901 and controls the time T4 when the first switch 712b and the second switch 712d are turned on. The controller 912 is an example of the "switch controller" of embodiments of the present invention.

Furthermore, the power supply device 901 includes a capacitor voltage detector 918b. The capacitor voltage detector 918b acquires the waveform of the voltage (capacitor voltage V_{C}) of the resonant capacitor 711b of the resonant circuit 711. Moreover, the capacitor voltage detector 918b transmits the acquired waveform of the capacitor voltage V_{C} to the controller 912.

Furthermore, the power supply device 901 includes a switch drive unit 917d. The switch drive unit 917d turns the first switch 712b and the second switch 712d on and off based on a command from the controller 912. Moreover, other configurations of the wireless power supply system 900 according to embodiments of the ninth example of the present invention are similar to those of the wireless power supply system 700 according to embodiments of the seventh example of the present invention.

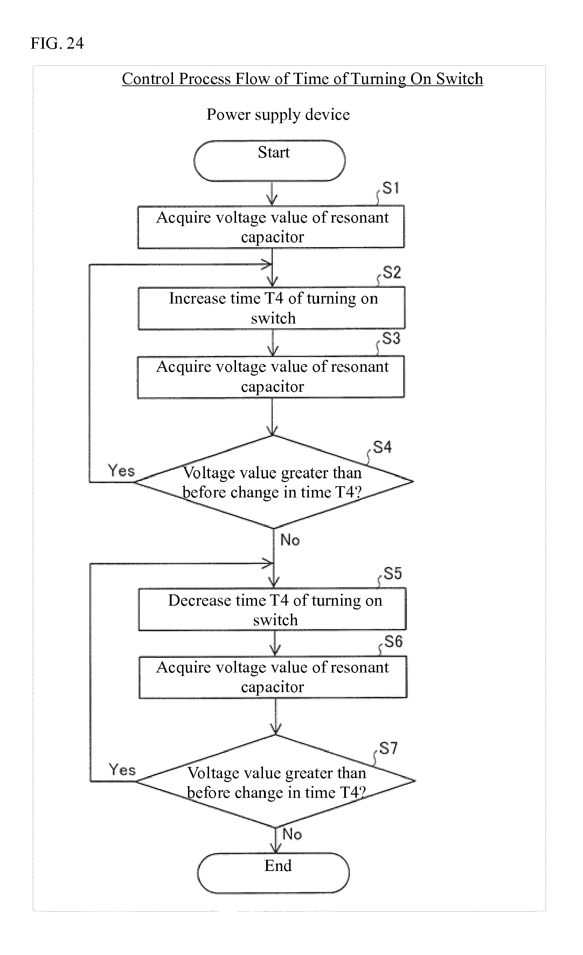

Next, a control process flow of the duration of the switch being on of the wireless power supply system 900 according to embodiments of the ninth example of the present invention will be described with reference to FIG. 24. Processing of the power supply device 901 is performed by the controller 912.

According to one or more embodiments of the ninth example of the present invention, the time T4 of turning on the first switch 712b and the second switch 712d is changed, values of the voltage value of the resonant capacitor 711 b (capacitor voltage V_{C}) detected by the capacitor voltage detector 918b before and after a change in the time T4 of turning on the first switch 712b and the second switch 712d are compared, and the time T4 is controlled so the voltage value of the capacitor voltage V_{C} becomes greater than before the time T4 is changed. This will be described in detail below.

First, at step S1, acquisition of the voltage value (for example, a peak value) of the resonant capacitor 711b is performed. Afterward, the flow proceeds to step S2.

Then, at step S2, the time T4 of turning on the first switch 712b and the second switch 712d is increased. Afterward, the flow proceeds to step S3.

Then, at step S3, acquisition of the voltage value (peak value) of the resonant capacitor 711b is performed. Afterward, the flow proceeds to step S4.

Then, at step S4, it is determined whether the voltage value (peak value) of the resonant capacitor 711b acquired at step S3 is become greater than the voltage value (peak value) of the resonant capacitor acquired before the change in the time T4 (before step S2). In a situation where the voltage value (peak value) of the resonant capacitor 711b is become greater than the voltage value of before the change in the time T4, the flow returns to step S2, and in a situation where the voltage value (peak value) of the resonant capacitor 711b is not become greater than the voltage value of before the change in the time T4, the flow proceeds to step S5.

Then, at step S5, the time T4 of turning on the first switch 712b and the second switch 712d is decreased. Afterward, the flow proceeds to step S6.

Then, at step S6, acquisition of the voltage value (peak value) of the resonant capacitor 711b is performed. Afterward, the flow proceeds to step S7.

Then, at step S7, it is determined whether the voltage value (peak value) of the resonant capacitor 711b acquired at step S6 is become greater than the voltage value (peak value) of the resonant capacitor 711b acquired before the change in the time T4 (before step S5). In a situation where the voltage value (peak value) of the resonant capacitor 711b is become greater than the voltage value of before the change in the time T4, the flow returns to step S5. Moreover, in a situation where the voltage value (peak value) of the resonant capacitor 711b is not become greater than the voltage value of before the change in the time T4, the control process of the duration of the switch being on in the wireless power supply system 900 is ended.

According to one or more embodiments of the ninth example of the present invention, effects such as below can be obtained.

According to one or more embodiments of the ninth example of the present invention, as above, the power supply device 901 includes the capacitor voltage detector 918b that detects the voltage value applied to the resonant capacitor 711b. Moreover, with the controller 912, the time T4 for turning on the first switch 712b and the second switch 712d is changed, the values of the voltage value (peak value) detected by the capacitor voltage detector 918b before and after the change in the time T4 are compared, and the time T4 is controlled so as to become greater than before the time T4 is changed.

Here, in a situation where the drive frequency f1 and the resonant frequency f2 of the power supply device 901 match, the impedance of the resonant circuit 711 is minimized, and the voltage value and the current value of the power supply coil 711 a and resonant capacitor 711b increase. Therefore, by controlling as above so the voltage value of the capacitor voltage V_{C} becomes greater than before changing the time T4, the resonant frequency f2 of the power supply device 901 and the resonant frequency f3 of the power receiving device 2 can be made closer values to the extent the voltage value of the resonant capacitor 711b is increased. As a result, by controlling so as to increase the voltage value of the resonant capacitor 711b, the resonant frequency f2 of the power supply device 901 and the resonant frequency f3 of the power receiving device 2 can more easily be made substantially equal. Moreover, other effects of the wireless power supply system 900 according to embodiments of the second example of the present invention are similar to those of the wireless power supply system 700 according to embodiments of the seventh example of the present invention.

Embodiments disclosed herein are examples at every point and should be considered as not limiting. The scope of the present invention is indicated not by the above description of embodiments but by the scope of patent claims and, moreover, includes meanings equivalent to the scope of patent claims and all modifications within the scope.

For example, in embodiments of the seventh to ninth examples of the present invention, an example is illustrated where the power receiving device of embodiments of the present invention is applied in a smart phone, but the present invention is not limited thereto. In embodiments of the present invention, the power receiving device may be applied to equipment other than a smart phone. For example, it may be applied to an electric automobile such as that illustrated in FIG. 1.

### (First Modified Example of Seventh Example)

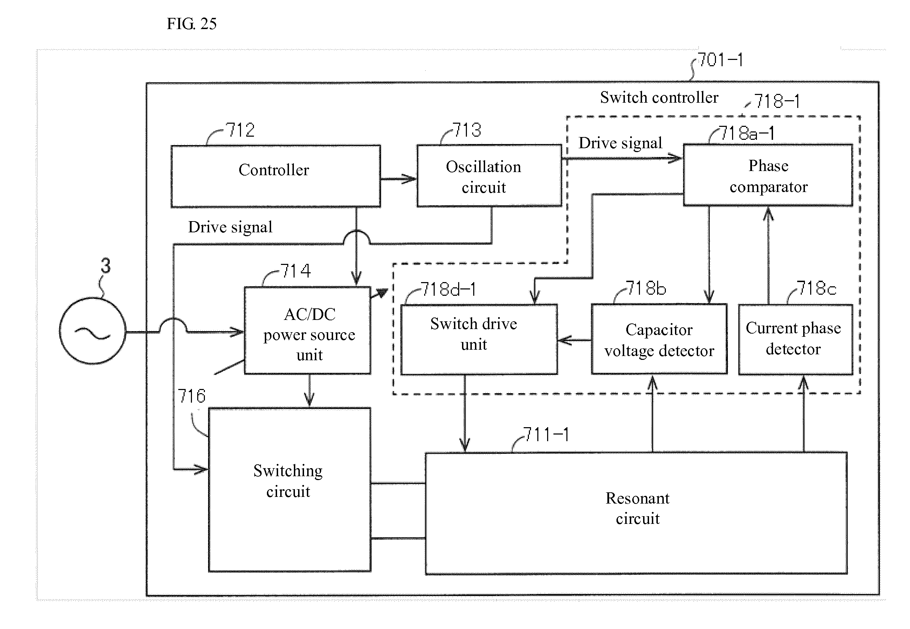

Accroding to embodiments of the seventh to ninth examples of the present invention, an example is illustrated of a configuration where both the first sub capacitor and first switch and the second sub capacitor and second switch of embodiments of the present invention are provided and the drive frequency and the resonant frequency of the power supply device are made to substantially match, but the present invention is not limited thereto. In embodiments of the present invention, a configuration may be such that only the first sub capacitor and first switch are provided and the drive frequency and the resonant frequency of the power supply device are made to substantially match. For example, in a power supply device 701-1 according to embodiments of the first modified example of the seventh example of the present invention illustrated in FIG. 25, a resonant circuit 711 that does not include a second sub capacitor or second switch is provided.

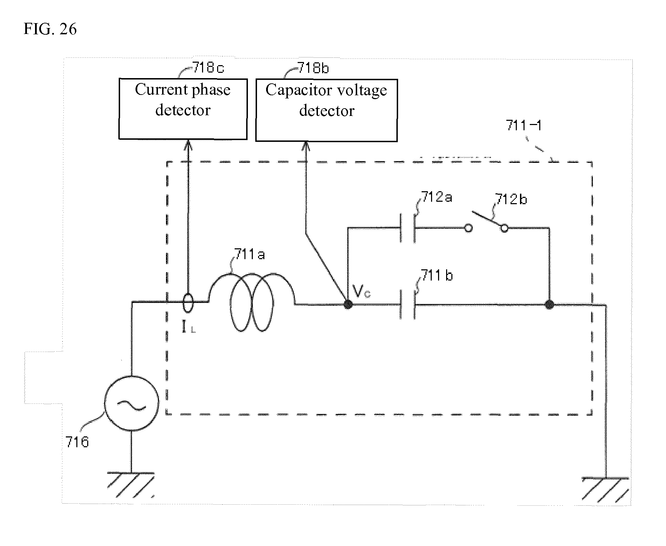

As illustrated in FIG. 25, the power supply device 701-1 according to embodiments of the first modified example of the seventh example of the present invention may comprise the resonant circuit 711 and a switch controller 718-1. Moreover, as illustrated in FIG. 26, the resonant circuit 711 includes the power supply coil 711a, the resonant capacitor 711b, the first sub capacitor 712a, and the first switch 712b.

The switch controller 718-1 includes the phase comparator 718a and a switch drive unit 718d-1. A phase comparator 718a-1, by a method similar to that of the phase comparator 718a-1 according to embodiments of the seventh example of the present invention, calculates the time T5 of turning on the first switch 712b so the phase difference φ3 between the phase of the drive signal and the phase of the coil current I_{L} becomes substantially 0.

Furthermore, the switch drive unit 718d-1 turns the first switch 712b on and off based on information of the time T5 acquired from the phase comparator 718a-1.

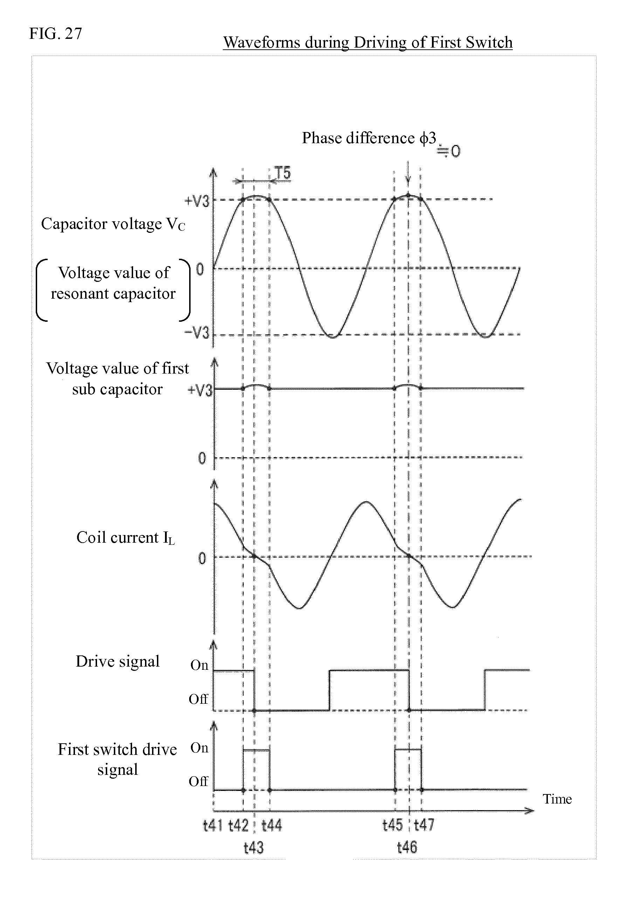

Furthermore, the switch drive unit 718d-1 turns the first switch 712b on and off based on the information of the time T5 acquired from the phase comparator 718a-1. Specifically, as illustrated in FIG. 27, the first switch 712b is turned on from point t42 to point t44 and from point t45 to point t47. As a result, the period of the coil current I_{L} and the period of the drive signal both become a period from point t43 to point t46, and the phase difference φ3 becomes substantially 0.

### (Second Modified Example of Seventh Example)

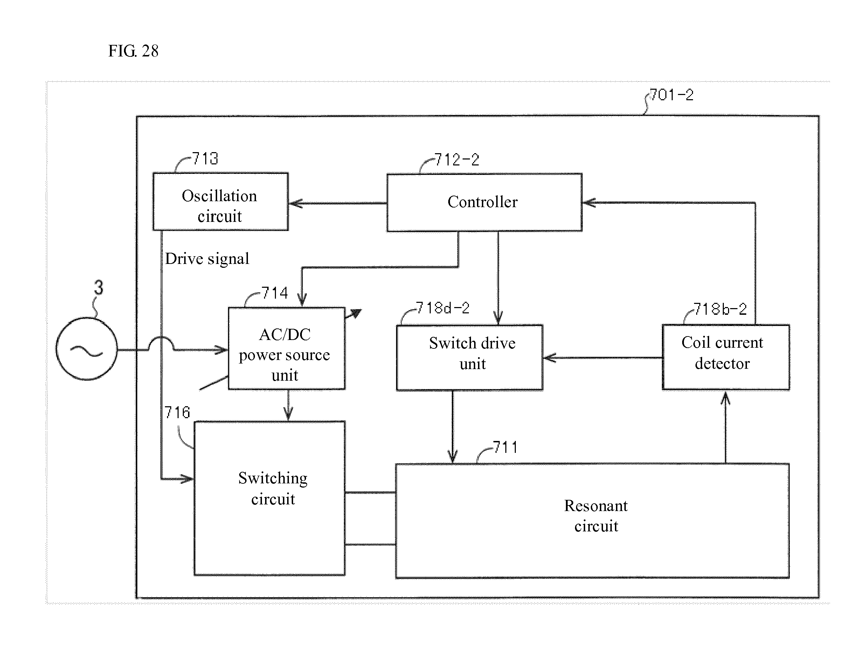

According to embodiments of the ninth example of the present invention, an example is illustrated of a configuration where the duration of the switch being on is changed, the values of the voltage value of the resonant capacitor before and after the change in the duration of the switch being on are compared, and the duration of the switch being on is controlled, but the present invention is not limited thereto. In embodiments of the present invention, a configuration may be such that the duration of the switch being on is changed, values of the current value of the power supply coil before and after the change in the duration of the switch being on are compared, and the duration of the switch being on is controlled. For example, a power supply device 701-2 according to embodiments of a second modified example of the seventh example (ninth example) of the present invention illustrated in FIG. 28 may comprise a coil current detector 718-2.

As illustrated in FIG. 28, the power supply device 701-2 according to embodiments of the second modified example of the seventh example (ninth example) of the present invention may comprise a coil current detector 718b-2 and a switch drive unit 718d-2.

The coil current detector 718b-2 is configured to be able to detect the current value that flows through the power supply coil 711a. Moreover, a controller 712-2 changes a time T6 of turning on the first switch 712b and the second switch 712d, compares current values before and after a change in the time T6 by the coil current detector 718b-2, and controls the time T6 so the current value becomes greater than before the time T6 is changed.

Furthermore, in one or more embodiments of the seventh to ninth examples of the present invention, examples are illustrated of numerical values relating to resonant frequencies and the like (for example, 88 kHz and 119 kHz and the like) of embodiments of the present invention, but the present invention is not limited thereto. In embodiments of the present invention, it may be favorable for the resonant frequency to be greater than the drive frequency and for the resonant frequency to be a frequency that can be changed into a size substantially equal to the drive frequency by the duration of the switch being on being controlled.

According to embodiments of the seventh to ninth examples of the present invention, for convenience in description, the processes of the controller of embodiments of the present invention are described using flowcharts of a flow-driven type where processing is performed in order along the process flow, but the present invention is not limited thereto. In embodiments of the present invention, process operations of the controller may be performed according to processing of an event-driven type, where processing is executed by event. In this situation, processing may be performed by a completely event-driven type, or event driving and flow driving may be combined.

According to embodiments of the first to ninth examples of the present inventon, an example is illustrated of including one power supply coil in the power supply device of embodiments of the present invention, but the present invention is not limited thereto. In embodiments of the present invention, a power supply device including a plurality of power supply coils may be used.

### [Explanation of References]

100, 200, 300, 400, 500, 600, 700, 800, 900 Non-contact power supply system
101, 101-1, 201, 301, 401, 501, 601, 701, 701-1, 701-2, 801, 901 Power supply device (wireless power supply device)
111, 211, 111-1 Resonant circuit (power supply device side resonant circuit)
111a, 111a-1, 711a Power supply coil
111b, 111b-1, 711b Resonant capacitor
115, 315, 515 Gate drive circuit (power converter)
116a, 116b, 316a, 316b, 516a to 516d FET (power converter)
117, 217 Switch
118, 218, 318, 418, 118-1, 718, 818, 718-1 Switch controller
118a, 218a, 418a, 118a-1 Phase comparison unit (voltage phase detector)
118b Capacitor voltage detector (voltage phase detector)
2 Power receiving device
21 a Power receiving coil
712a, 812a First sub capacitor (sub capacitor)
712b, 812b First switch (switch)
712c, 812c Second sub capacitor (sub capacitor)
712d, 812d Second switch (switch)
718a, 818a, 718a-1 Phase comparator (phase difference detector)
812e First diode unit (diode unit)
812f Second diode unit (diode unit)
912, 712-2 Controller (switch controller)
918b Capacitor voltage detector (detector)
918b Coil current detector (detector)

## Claims

1. A wireless power supply device comprising:
a resonant circuit (111) comprising a power supply coil (111a) and a resonant capacitor (111b); and
a controller that changes a waveform of power in the resonant circuit (111) and causes a phase difference between a phase of a drive signal that drives the resonant circuit (111) and a phase of current flowing through the power supply coil (111a) to be substantially 0.

2. A wireless power supply device, comprising:
a resonant circuit (111) comprising:
a power supply coil (111a) that supplies power to an external power receiving device (2); and
a resonant capacitor (111b);
a switch (117) connected to the resonant circuit; and
a switch controller (118) that controls a duration of the switch (117) being on and off, and causes a phase difference between a phase of a drive signal that drives the resonant circuit and a phase of current that flows through the power supply coil to be substantially 0.

3. The wireless power supply device according to claim 2, wherein
a resonant frequency (f2) of the resonant circuit (111) is greater than a drive frequency (f1) of the drive signal, and
the switch controller (118) turns the switch (117) on and off and, by changing a waveform of the power of the resonant circuit (111) having the resonant frequency (f2), causes the phase difference to be substantially 0.

4. The wireless power supply device according to claim 2, further comprising: a voltage phase detector (118a, 118b) that detects a phase of a voltage of at least one of the resonant capacitor (111b) and the power supply coil (111a), wherein
the switch controller (118) controls the duration of the switch being on and off, and causes a phase difference between the phase of the drive signal and a phase of the at least one of the resonant capacitor and the power supply coil (111a) to be substantially 90 degrees.

5. The wireless power supply device according to any of claims 2 to 4, wherein the switch (117) switches between a state of cutting off the resonant circuit (111) and a state of conducting the resonant circuit.

6. The wireless power supply device according to claim 5, wherein the switch controller (118) causes the phase difference to be substantially 0 by turning off the switch (117) for a predetermined time period when a voltage value of the resonant capacitor or a voltage value of the power supply coil (111a) is at least maximized or minimized.

7. The wireless power supply device according to claim 5, wherein the switch controller (418) causes the phase difference to be substantially 0 by turning off the switch for a predetermined time period that is not an entirety but a portion of when a voltage value of the resonant capacitor or a voltage value of the power supply coil is at least maximized or minimized.

8. The wireless power supply device according to claim 5, wherein the switch is a power converter (315, 316a, 316b) that converts power from the outside to power of an alternating current based on the drive signal by switching the outside to power, and supplies the converted power to the resonant circuit (111) as power for the power supply coil to generate a powered magnetic field.

9. The wireless power supply device according to any of claims 2 to 4, wherein the switch (217) is connected in parallel to the power supply coil (111a) and shorts the power supply coil.

10. A wireless power supply device, comprising:
a power supply coil (711a) that supplies power to an external power receiving device (2);
a resonant capacitor (711b) connected in series to the power supply coil;
a sub capacitor connected in parallel to the resonant capacitor;
a switch that switches a connection state between the resonant capacitor and the sub capacitor; and
a switch controller (718) that controls the switch, wherein
when a voltage value of the resonant capacitor (711b) and a voltage value of the sub capacitor are substantially equal, the switch controller (718) turns on the switch, connects the resonant capacitor and the sub capacitor, and controls a duration of the switch being on.

11. The wireless power supply device according to claim 10, wherein a capacitance value of the resonant capacitor (711b) causes a resonant frequency of the resonant capacitor and the power supply coil (711a) to be greater than a drive frequency of a drive signal that drives the power supply coil and the resonant capacitor.

12. The wireless power supply device according to claim 10 or 11, wherein
the sub capacitor comprises a first sub capacitor (712a) and a second sub capacitor (712c) that are respectively connected in parallel to the resonant capacitor (711b),
the switch comprises a first switch (712b) connected to the first sub capacitor and a second switch (712d) connected to the second sub capacitor, and
the switch controller (718) turns on the first switch when the voltage value of the resonant capacitor is a voltage value that is near a maximum and substantially equal to a voltage value of the first sub capacitor, and turns on the second switch when the voltage value of the resonant capacitor is a voltage value that is near a minimum and substantially equal to a voltage value of the second sub capacitor.

13. The wireless power supply device according to claim 10 or 11, wherein
the switch controller (718)
turns on the switch when the voltage value of the resonant capacitor (711b) and the voltage value of the sub capacitor are substantially equal, and
controls a duration of the switch being on and causes the switch to be turned off when the voltage value of the resonant capacitor (711b) and the voltage value of the sub capacitor are again the voltage values of when the switch is turned, when the voltage value of the resonant capacitor and the voltage value of the sub capacitor are substantially equal voltage values.

14. The wireless power supply device according to claim 10 or 11, further comprising: a phase difference detector (718a) that detects a phase difference between a phase of a drive signal that drives the power supply coil (711a) and the resonant capacitor and a phase of current that flows through the power supply coil, wherein
the switch controller
turns on the switch when the voltage value of the resonant capacitor (711b) and the voltage value of the sub capacitor are substantially equal, and
controls a duration of the switch being on and causes the phase difference detected by the phase difference detector to be substantially 0.

15. The wireless power supply device according to claim 10 or 11, further comprising: a detector that detects at least one of a voltage value applied to the power supply coil (711a) or the resonant capacitor (711b) and a current value that flows through the power supply coil or the resonant capacitor, wherein
the switch controller
changes a duration of the switch being on,
compares values before and after the change in the duration of the switch being on between the voltage value or the current value detected by the detector, and
controls the duration of the switch being on and causes the voltage value or the current value to increase from before the duration of the switch being on is changed.
